# EUROPEAN PATENT APPLICATION

(11) **EP 4 534 176 A1**
(43) Date of publication of application: **09.04.2025**
(21) Application number: 23815029.6
(22) Date of filing: 23.05.2023
(51) Int. Cl.: B01D 53/04, F28D 7/02, H01M 10/613, H01M 10/655, H01M 50/383

(54) **BATTERY THERMAL RUNAWAY FLUE GAS TREATMENT DEVICE AND BATTERY**

(30) Priority: 30.05.2022 CN 202210600390; 30.05.2022 CN 202210602959; 15.07.2022 CN 202221817178 U; 29.07.2022 CN 202221983411 U; 17.08.2022 CN 202210987827; 13.09.2022 CN 202222423143 U; 19.11.2022 CN 202223068479 U
(71) Applicant: D-Aus Energy Storage Technology (Xi'an) Co., Ltd, Xi' An, Shaanxi 710075 (CN)
(72) Inventor: HAN, Xiaoyu, Xi'an, Shaanxi 710075 (CN); LEI, Zhengjun, Xi'an, Shaanxi 710075 (CN); ZHANG, Sanxue, Xi'an, Shaanxi 710075 (CN); LI, Peng, Xi'an, Shaanxi 710075 (CN)
(74) Representative: Zacco GmbH
(86) International application number: PCT/CN2023/095831
(87) International publication number: WO 2023/231845

(57) **Abstract**

The present invention provides a battery thermal runaway flue gas treatment device and a battery, so as to mainly solve the problem of potential safety hazards caused by high-temperature flue gas due to thermal runaway of a battery. The battery thermal runaway flue gas treatment device is configured to treat thermal runaway flue gas generated after thermal runaway of the battery, thereby improving the safety of the battery.

## Description

### Technical Field

The present invention belongs to the field of batteries, and specifically, to a battery thermal runaway flue gas treatment device and a battery.

### Background

Lithium-ion batteries have a wide range of applications, and in recent years, with the further development of the lithium-ion batteries in the field of energy storage, the safe use of the lithium-ion batteries has also received attention. Due to the principle and structural feature of the lithium-ion battery, large amounts of heat are generated due to internal resistance during repeated use, and the heat gradually increases. If the accumulated heat is not effectively dissipated, the temperature will further rise. When the temperature reaches a limit, the thermal balance of the battery is disrupted, triggering a series of self-heating side reactions and generating large quantities of flammable gases, and thus showing a "thermal runaway" phenomenon. The main components of the thermal runaway gas of the battery include various flammable gases such as CO, H₂, hydrocarbons, etc., as well as acid gases such as HF, HCN, HCL, PF₅, etc. In addition, there is also vapor of electrolyte, the above thermal runaway flue gas may cause a fire inside the battery and, in severe cases, an explosion, resulting in a safety hazard.

CN114597537A provides a battery module structure. The battery module structure includes a plurality of exhaust passages, a profiling plate, and an energy storage unit. The plurality of exhaust passages are independently arranged at the bottom of a box body; the profiling plate is fixedly connected to the box body, and seals the plurality of exhaust passages; the profiling plate includes a plurality of heat dissipation holes, and the heat dissipation holes communicate with the exhaust passages; and the energy storage unit includes a plurality of cells, and the plurality of cells are fixedly connected to the profiling plate, and correspond to the plurality of heat dissipation holes on a one-to-one basis. In the battery module structure, the exhaust passages independently arranged at the bottom of the box body may perform directional emission on high temperature and high pressure gases generated by thermal runaway of the cell. Although the structure may perform directional emission on the thermal runaway flue gases, the emitted thermal runaway gases may pollute environments, and the high temperature thermal runaway gases may cause a secondary explosion, thus still having certain potential safety hazards.

### Summary

In order to solve the problem of potential safety hazards caused by high-temperature flue gas due to thermal runaway of a battery, some embodiments of the present invention provide a battery thermal runaway flue gas treatment device and a battery.

In order to achieve the above objective, the technical solutions of the embodiments of the present invention are implemented as follows.

Some embodiments of the present invention provide a battery thermal runaway flue gas treatment device, configured to treat a thermal runaway flue gas generated after thermal runaway of a battery. The present invention specifically provides the following forms of the battery thermal runaway flue gas treatment devices.

In an embodiment, the battery thermal runaway flue gas treatment device includes a cooling unit and an adsorption unit. The cooling unit includes N cooling tanks connected in series in sequence, a cooling channel for cooling liquid to pass through and a flue gas channel for a battery thermal runaway flue gas to pass through are arranged in each of the N cooling tanks; at the same time, each of the N cooling tanks is provided with a cooling inlet and a cooling outlet communicating with the cooling channel, and a flue gas inlet and a flue gas outlet communicating with the flue gas channel, where N is an integer greater than or equal to 1. The adsorption unit includes M adsorption tanks connected in series in sequence, and each of the M adsorption tanks is filled with an adsorbing material, where M is an integer greater than or equal to 1; and a smoke inlet of a 1st adsorption tank of the M adsorption tanks communicates with the flue gas outlet of an Nth cooling tank of the N cooling tanks, and the battery thermal runaway flue gas is first cooled by the cooling tank and then adsorbed by the M adsorption tanks. The cooling of the thermal runaway flue gas of the battery thermal runaway flue gas treatment device is liquid cooling, compared to solid cooling, a liquid medium for the liquid cooling is large in thermal capacity, good in cooling effect, and power-recyclable, causing subsequent adsorption treatments to be more sufficient, thereby further guaranteeing the safety of a battery.

In an embodiment, a flue gas pipe is disposed in each of the N cooling tanks, an inner cavity of the flue gas pipe is the flue gas channel, and an inner cavity of each of the N cooling tanks outside the flue gas pipe is the cooling channel. In this way, the arrangement of the cooling channel and the flue gas channel in each of the N cooling tanks is facilitated, causing a structure of each of the N cooling tanks to be simpler.

In an embodiment, the flue gas pipe is distributed in a spiral shape inside each of the N cooling tanks, and is configured to increase a length of travel through which the battery thermal runaway flue gas passes, so as to fully cool the thermal runaway flue gas. The adsorption process is related to pressure. If the pressure is high, the adsorption is performed quickly. When the pressure increases, an adsorption phenomenon starts to be significant. Thus, after there is a shutoff pressure, an adsorbed substance is adsorbed on a surface of an adsorbent. Based on this, the smoke inlet of each of the M adsorption tanks is disposed on a top end of each of the M adsorption tanks, and a smoke outlet is disposed on a bottom end of each of the M adsorption tanks. In an embodiment, each of the M adsorption tanks is designed as a pressure-bearing tank body. The tank body may bear a larger pressure, so as to improve an adsorption effect.

In an embodiment, a reflux tank is disposed at the flue gas outlet of at least one of the N cooling tanks. The number of the reflux tanks is set according to the number of batteries. In an embodiment, the reflux tank is disposed at the flue gas outlet of the Nth cooling tank, in another embodiment, reflux tanks are simultaneously disposed at the flue gas outlets of a plurality of cooling tanks. When being mounted, a mounting height of the reflux tank is lower than a height of the flue gas outlet of each of the N cooling tanks, so as to collect a liquid medium after condensation of the thermal runaway flue gas. The reflux tank is a circular tank body or a square tank body, the structure thereof may be diverse, and the reflux tank may collect the liquid medium after the condensation of the thermal runaway flue gas. Since a main substance in the liquid medium is liquid electrolyte, after the liquid medium is collected, the electrolyte in the high temperature thermal runaway flue gas may be prevented, after being cooled and liquefied, from being vaporized by the new high temperature flue gas to bring into the flue gas channel again, the flue gas required to be treated by the adsorbing materials is reduced after being collected, and the risk of subsequent explosions and combustion of the electrolyte is also avoided.

In an embodiment, a gas collection unit is disposed at the smoke outlet of the Mth adsorption tank, and is configured to collect the treated thermal runaway flue gas, thereby completely avoiding the impact of the thermal runaway flue gas on environments, and simultaneously avoiding the risk of secondary explosions. The cooling liquid is water or an ethylene glycol solution; each of the adsorbing materials is activated carbon, molecular sieve or alumina; and through the use of the above materials, the cost of the entire device is further reduced.

The battery thermal runaway flue gas treatment device includes a cooling unit and an adsorption unit, which are arranged in sequence. The cooling unit is filled with a cooling material, and configured to reduce a temperature and flow rate of the thermal runaway flue gas; the adsorption unit includes a first adsorption device, a second adsorption device, and a third adsorption device, which are arranged in sequence; the first adsorption device is filled with an alkaline adsorbing material, and configured to adsorb an acid gas; the second adsorption device is filled with a polar molecule adsorbing material, and configured to adsorb a polar molecule; and the third adsorption device is filled with a non-polar molecule adsorbing material, and configured to adsorb a non-polar molecule.

In an embodiment, the battery thermal runaway flue gas treatment device further includes a reflux tank. A gas outlet section of the reflux tank communicates with a gas inlet section of the cooling unit; and a mounting height of the reflux tank is lower than a mounting height of the cooling unit, so as to collect electrolyte after condensation.

In an embodiment, a gas inlet section of the first adsorption device communicates with a gas outlet section of a cooling device through a connection pipe; a gas inlet section of the second adsorption device communicates with a gas outlet section of the first adsorption device through a connection pipe; and a gas inlet section of the third adsorption device communicates with a gas outlet section of the second adsorption device through a connection pipe.

In an embodiment, the cooling material is silica, alumina, zirconia, titanium oxide, or honeycomb ceramic; the alkaline adsorbing material is an SDG-I type adsorbent or SDG-II type adsorbent; the polar molecule adsorbing material is zeolite; and the non-polar molecule adsorbing material is activated carbon.

In an embodiment, the battery thermal runaway flue gas treatment device further includes a gas collection unit. The gas collection unit is connected to a gas outlet section of the third adsorption device.

The battery thermal runaway flue gas treatment device includes a reaction unit and an adsorption unit, which are connected to each other. The reaction unit includes N reaction devices connected in series; reaction substances are disposed in the N reaction devices; the reaction substances are able to chemically react with a flammable gas and/or an acid gas, to convert the flammable gas into a non-flammable gas, and convert the acid gas into a non-flammable substance or reduce corrosiveness thereof, where N is an integer greater than or equal to 1. The adsorption unit includes M adsorption devices connected in series; and the M adsorption devices are filled with cooling materials and/or adsorbing materials, so as to cool and/or adsorb a reacted thermal runaway flue gas, where M is an integer greater than or equal to 1.

In an embodiment, the reaction substance is a metal oxide and/or an alkaline compound; the metal oxide is configured to undergo a reduction reaction with the flammable gas to convert the flammable gas into the non-flammable gas; and the alkaline compound is configured to undergo a neutralization reaction with the acid gas to convert the acid gas into the non-flammable substance or reduce corrosiveness thereof.

In an embodiment, the metal oxide is one or more of reduced copper oxide, cuprous oxide, ferric oxide, alumina, cobalt oxide, chromium oxide, and tungsten oxide; the alkaline compound is one or more of strong alkali, a strong alkali weak acid salt, and an alkaline organic compound; the cooling material is a combination of one or more of a ceramic ball, a honeycomb ceramic body, silica, alumina, zirconia, and titanium oxide; and the adsorbing material is a combination of one or more of activated carbon, graphite, alumina, montmorillonite, silicate, phosphate, and porous glass.

In an embodiment, adjacent reaction devices of the N reaction devices are connected in series through a bent pipe, and/ or adjacent adsorption devices of the M adsorption devices are connected in series through a bent pipe, and/ or adjacent devices of a reaction device of the N reaction devices and an adsorption device of the M adsorption devices are connected in series through a bent pipe; and a buffer reflux cavity for the thermal runaway flue gas to pass through is formed in the bent pipe. A gas collection bag is also connected to an outlet of a last adsorption device of the M adsorption devices, so as to collect the treated thermal runaway flue gas.

In an embodiment, the battery thermal runaway flue gas treatment device includes a cooling unit, a dilution unit, and a mixing device. The cooling unit includes N cooling devices connected in series; each of the N cooling devices is filled with a first cooling substance to cool the thermal runaway flue gas, wherein N is an integer greater than or equal to 1; and the dilution unit is configured to generate a dilution gas and/or dilution smog, and the dilution gas and/or dilution smog is mixed with the cooled thermal runaway flue gas in the mixing device, so as to reduce a concentration of a flammable gas in the thermal runaway flue gas, causing the flammable gas to be non-flammable.

In an embodiment, the dilution unit includes a dilution device and an inductive switch; the dilution device is provided with an aerosol generating agent; the inductive switch starts the dilution device after sensing the thermal runaway flue gas, so as to cause the dilution device to generate aerosol smog; and the aerosol smog is mixed with the cooled thermal runaway flue gas in the mixing device.

In an embodiment, the dilution device and/or the mixing device is also provided with a second cooling substance, so as to cool the dilution gas, the dilution smog and/or a mixed gas.

In an embodiment, the first cooling substance is a physical cooling substance; the second cooling substance is a physical cooling substance and/or a chemical cooling substance; the physical cooling substance is at least one of a ceramic ball, a honeycomb ceramic body, silica, alumina, zirconia, or titanium oxide; and the chemical cooling substance is at least one of metal carbonate or basic carbonate.

In an embodiment, the adjacent cooling devices are connected in series through a flexible pipe or bent pipe, and a buffer reflux cavity for the thermal runaway flue gas to pass through is formed in the flexible pipe or bent pipe.

In an embodiment, the battery thermal runaway flue gas treatment device further includes an adsorption unit. The adsorption unit includes at least one adsorption device; the at least one adsorption device is disposed on an outlet end of an Nth cooling device of the N cooling devices, with internally provided with an adsorbent substance, so as to adsorb the cooled thermal runaway flue gas; and the adsorbed thermal runaway flue gas is mixed with the dilution gas and/or dilution smog in the mixing device.

In an embodiment, a gas collection unit is also connected to an outlet of the mixing device, and is configured to collect the treated thermal runaway flue gas.

In an embodiment, the battery thermal runaway flue gas treatment device includes a cooling housing and a cooling material. A baffle plate is disposed in the cooling housing; the baffle plate divides the cooling housing into a cooling cavity and a reflux cavity; each of the cooling materials is filled in the cooling cavity to cool the thermal runaway flue gas; the baffle plate is provided with a channel; the reflux cavity is located below the cooling cavity, and configured to collect cooled electrolyte; the cooling housing is provided with a gas inlet and a gas outlet; the thermal runaway flue gas enters the cooling housing through the gas inlet, is cooled through the cooling material, and is discharged through the gas outlet; and the cooled electrolyte flows in the reflux cavity.

In an embodiment, the gas inlet is provided above the baffle plate, and the gas outlet is provided on a top end of the cooling housing.

In an embodiment, a liquid discharging valve is disposed on the cooling housing, and is configured to discharge the electrolyte in the reflux cavity.

In an embodiment, the battery thermal runaway flue gas treatment device includes a cooling housing and a honeycomb ceramic cylinder. The cooling housing at least includes a first housing and a second housing; the first housing and the second housing are enclosed to form a closed cavity; the honeycomb ceramic cylinder is disposed in the closed cavity; the first housing and/or the second housing is provided with a gas inlet and an exhaust port; and the thermal runaway flue gas enters the cooling housing through the gas inlet, is cooled through the honeycomb ceramic cylinder, and is discharged through the exhaust port.

In an embodiment, a metal coating is disposed on a porous structure of the honeycomb ceramic cylinder, and is configured to adsorb a flammable gas in the thermal runaway flue gas; and the metal coating is at least one of a rhodium layer, a platinum layer, or a palladium layer.

**The** battery thermal runaway flue gas treatment device includes a battery thermal runaway flue gas liquid processing agent. **The** battery thermal runaway flue gas liquid processing agent is mainly composed of one or more of an electrolyte adsorbent, a flammable gas processing agent, and an acid gas processing agent; the electrolyte adsorbent is a liquid that is able to be miscible with electrolyte, and is configured to adsorb the electrolyte in the thermal runaway flue gas; the flammable gas processing agent is a liquid that is able to dilute a flammable gas in the thermal runaway flue gas; and the acid gas processing agent is a liquid that is able to treat an acid gas in the thermal runaway flue gas, so as to cause the acid gas to be non-flammable.

In an embodiment, the electrolyte adsorbent is an electrolyte activity inhibitor; the flammable gas processing agent is a liquid flame retardant; and the acid gas processing agent is an ionic liquid.

In an embodiment, the electrolyte activity inhibitor includes one or more of liquid organic ether, ethylene glycol, and 107 silicone rubber; the liquid organic ether comprises one or more of methyl perfluoroisobutyl ether, 1,2-dimethoxyethane, diglyme, dimethoxymethane, methyl nonafluorobutyl ether, tetrahydrofuran, ethyl/methyl tetrahydrofuran, benzenes, and biphenyl; the liquid flame retardant includes one or more of ethyl benzoate, trimethyl phosphate, tributyl phosphate, tri(fluoroethyl) phosphate, dimethyl phosphate, isopropylphenyl phosphate, cresyl diphenyl phosphate, diphenyl octyl phosphate, alkyl phosphate, hexamethylphosphoramide, tris(2,2,2-trifluoroethyl) phosphite, fluorinated acrylate, dimethyl formate, methyl acetate, methyl propionate, and γ-butyrolactone; and the ionic liquid includes one or more of imidazoles, quaternary ammonium salts, pyridines, and pyrazoles.

In an embodiment, the battery thermal runaway flue gas liquid processing agent is mainly composed of components with a following volume parts: 20-50 parts of the electrolyte activity inhibitor, 30-60 parts of the liquid flame retardant, and 5-30 parts of the ionic liquid.

In an embodiment, an application of the above battery thermal runaway flue gas liquid processing agent in treatment of a battery thermal runaway flue gas is also provided.

In an embodiment, the present invention further provides a battery, including any one of the above battery thermal runaway flue gas treatment devices.

Compared with the related art, technical solutions of the embodiment of the present invention have the following advantages.
1. In the battery thermal runaway flue gas treatment device of the embodiment of the present invention, a temperature may be fully reduced after the battery thermal runaway flue gas passes through the flue gas channel in each of the N cooling tanks, such that the adsorption of the flue gas in the rear adsorption tank is increased, the thermal runaway flue gas is adsorbed more thoroughly, and the gas coming out of the flue gas outlet of the M adsorption tanks is as incombustible as possible, thereby greatly improving safety. Meanwhile, after the battery thermal runaway flue gas is cooled on the front end, the service life of the rear-end adsorption units may be prolonged.
2. In the battery thermal runaway flue gas treatment device of the embodiment of the present invention, the cooling unit, the first adsorption device, the second adsorption device, and the third adsorption device are arranged in sequence; and the thermal runaway flue gas is cooled and adsorbed, and high temperature flammable and harmful gases are fully adsorbed, so as to avoid hazards such as fire, explosion, etc., thereby improving the safety of a battery. The cooling unit is disposed before the adsorption unit, such that adverse effects on the adsorption performance of the adsorbing material in the adsorption unit due to excess temperature of the thermal runaway flue gas may be avoided, and an adsorption effect of each of the adsorbing materials is improved, causing the adsorption to be more thorough, thereby improving the safety of the battery.
3. In the battery thermal runaway flue gas treatment device of the embodiment of the present invention, the polar molecule adsorbing material in the second adsorption device is an alkaline component. By disposing the first adsorption device before the second adsorption device, acid gases such as HF, HS, HCl, PF₅, etc. in the thermal runaway flue gas may be adsorbed to prevent the acid gases in the thermal runaway flue gas from reacting with the polar molecule adsorbing material to generate adverse effects on the adsorption performance of the second adsorption device, so as to improve the adsorption effect of the polar molecule adsorbing material, thereby improving the adsorption efficiency of the second adsorption device, and improving the safety of the battery. The non-polar molecule adsorbing material in the third adsorption device has a non-polar surface with an affinity for non-polar molecules such as H₂ and hydrocarbon in the thermal runaway flue gas. By disposing the second adsorption device before the third adsorption device, polar molecule gases such as CO and water vapor in the thermal runaway flue gas may be adsorbed, such that the purity of non-polar molecule gases such as H₂ and hydrocarbon in the thermal runaway flue gas is improved, the adsorption effect of the non-polar molecule adsorbing material is improved, and the adsorption efficiency of the third adsorption device is improved, thereby improving the safety of the battery.
4. In the battery thermal runaway flue gas treatment device of the embodiment of the present invention, chemical treatment is performed on the flammable gas and/or acid gas in the thermal runaway flue gas through the reaction substance, the flammable gas and the acid gas are converted into the non-flammable gas and the non-flammable substance, or the corrosiveness of the acid gas is reduced, the proportion of the flammable gas and the acid gas in the thermal runaway flue gas is reduced; and then, the cooling material and/or adsorbing material is configured for treatment, small droplets of the electrolyte volatilized due to a high temperature are cooled by the cooling material and flow back to the reflux cavity, the remaining flammable gas is adsorbed by the adsorbing material, such that the device treats the battery thermal runaway flue gas more thoroughly, so as to ensure that the gas coming out of the gas outlet is non-flammable, thereby greatly improving the safety.
5. In the battery thermal runaway flue gas treatment device of the embodiment of the present invention, when the battery thermal runaway flue gas passes through the reaction unit, the flammable gas and the acid gas may be converted into the non-flammable gas and the non-flammable substance, or the corrosiveness of the acid gas is reduced, such that the amount of the rear-end cooling material and adsorbing material configured may be reduced, thereby reducing the cost of the rear-end adsorption device, and prolonging the service life of the rear-end adsorption device.
6. In the battery thermal runaway flue gas treatment device of the embodiment of the present invention, the adjacent reaction devices and/or adsorption devices are assembled through the bent pipe, making the reaction device and adsorption device easy to mount and dismount and suitable for most existing single batteries and assembled batteries, and changes in the structure of an existing battery are not required, such that the battery thermal runaway flue gas treatment device is low in treatment cost and wide in application range.
7. In the battery thermal runaway flue gas treatment device of the present invention, the thermal runaway flue gas is cooled by the cooling substance, small droplets of the electrolyte volatilized due to the high temperature are cooled by the cooling substance and flow back to the reflux cavity; and then the dilution unit produces the dilution gas and/or dilution smog, and the dilution gas and/or dilution smog is mixed with the cooled thermal runaway flue gas in the mixing device, so as to reduce the concentration and proportion of the flammable gas in the thermal runaway flue gas, and making the flammable gas non-flammable, such that the device treats the battery thermal runaway flue gas more thoroughly, so as to ensure that the gas coming out of the gas outlet is non-flammable, thereby greatly improving the safety.
8. In the battery thermal runaway flue gas treatment device of the present invention, the thermal runaway flue gas is cooled by the cooling material, the electrolyte volatilized due to the high temperature is cooled by the cooling material and flows back to the reflux cavity, so as to reduce the concentration and proportion of the flammable gas in the thermal runaway flue gas, causing the gas coming out of the gas outlet to be non-flammable, thereby greatly improving the safety of the battery.
9. In the battery thermal runaway flue gas treatment device of the present invention, the reflux cavity is disposed below the cooling cavity and configured to collect the cooled electrolyte, such that the electrolyte in the high temperature thermal runaway flue gas may be prevented, after being cooled and liquefied, from being vaporized by the new high temperature flue gas to bring into the flue gas channel again, causing the treatment to be more thorough, thereby improving the safety of the battery. **The** baffle plate is of a funnel-shaped structure, facilitating the flowing of the cooled electrolyte into the reflux cavity. The cooling housing is a cylindrical cooling housing with good pressure resistance, with a structure being stable and not easy to deform.
10. The battery thermal runaway flue gas treatment device of the present invention includes the cooling housing and the honeycomb ceramic cylinder. The honeycomb ceramic cylinder is disposed in the cooling housing. The honeycomb ceramic cylinder is of a porous structure, and is stable in structure, convenient in mounting, and uniform in filtration. The length of travel through which the flue gas passes is long, and thermal shock resistance is improved, such that the thermal runaway flue gas may be well cooled to ensure that the gas coming out of the exhaust port is non-flammable, so as to avoid the risk of secondary explosions, thereby greatly improving the safety of the battery. Meanwhile, the honeycomb ceramic cylinder is of a columnar structure, which may be conveniently mounted and dismounted, and the cooling device formed by the honeycomb ceramic cylinder and the cooling housing is a modular device may be conveniently assembled and disassembled.
11. **The** battery thermal runaway flue gas liquid processing agent of the present invention is mainly composed of one or more of an electrolyte adsorbent, a flammable gas processing agent, and an acid gas processing agent; the electrolyte adsorbent is a liquid that is able to be miscible with electrolyte, and is configured to adsorb the electrolyte in the thermal runaway flue gas, so as to terminate the decomposition and volatilization of the electrolyte; the flammable gas processing agent is a liquid that is able to dilute a flammable gas in the thermal runaway flue gas; and the acid gas processing agent is a liquid that is able to treat an acid gas in the thermal runaway flue gas, so as to cause the acid gas to be non-flammable. After the thermal runaway flue gas passes through the above adsorption liquid, the electrolyte, flammable gas, and the acid gas in the runaway flue gas of a lithium battery are adsorbed and treated as much as possible, ensuring that the treated gas is non-flammable, thereby improving a purification effect, and greatly improving the safety of the lithium battery at the same time.

### Brief Description of the Drawings

Fig. 1 is a schematic structural diagram of a battery thermal runaway flue gas treatment device according to Embodiment 1.
Fig. 2 is a schematic structural diagram of a cooling tank according to Embodiment 1.
Fig. 3 is a schematic structural diagram of an adsorption tank according to Embodiment 1.
Fig. 4 is a schematic structural diagram of a battery thermal runaway flue gas treatment device according to Embodiment 2.
Fig. 5 is a schematic structural diagram of a cooling tank according to Embodiment 2.
Fig. 6 is a schematic structural diagram of a cooling tank according to Embodiment 3.
Fig. 7 is a schematic structural diagram of a battery thermal runaway flue gas treatment device according to Embodiment 4.
Fig. 8 is a schematic structural diagram of a battery thermal runaway flue gas treatment device according to Embodiment 5.
Fig. 9 is a schematic structural diagram of a battery thermal runaway flue gas treatment device according to Embodiment 7.
Fig. 10 is a schematic structural diagram of an adsorption device provided with a porous plate according to Embodiment 7.
Fig. 11 is a schematic structural diagram of a battery thermal runaway flue gas treatment device according to Embodiment 8.
Fig. 12 is a schematic structural diagram of a battery including a battery thermal runaway flue gas treatment device according to Embodiment 9.
Fig. 13 is a schematic structural diagram of a battery thermal runaway flue gas treatment device according to Embodiment 10.
Fig. 14 is a partial enlarged schematic structural diagram of a battery thermal runaway flue gas treatment device according to Embodiment 10.
Fig. 15 is a schematic structural diagram of a battery thermal runaway flue gas treatment device according to Embodiment 11.
Fig. 16 is a schematic structural diagram of a battery thermal runaway flue gas treatment device according to Embodiment 12.
Fig. 17 is a schematic structural diagram I of a battery thermal runaway flue gas treatment device according to Embodiment 14.
Fig. 18 is a schematic structural diagram II of a battery thermal runaway flue gas treatment device according to Embodiment 14.
Fig. 19 is a schematic structural diagram III of a battery thermal runaway flue gas treatment device according to Embodiment 14.
Fig. 20 is a schematic structural diagram I of a battery thermal runaway flue gas treatment device according to Embodiment 16.
Fig. 21 is a schematic structural diagram II of a battery thermal runaway flue gas treatment device according to Embodiment 16.
Fig. 22 is a schematic diagram of a honeycomb ceramic cylinder according to Embodiment 16.
Fig. 23 is a schematic structural diagram I of a battery thermal runaway flue gas treatment device according to Embodiment 17.
Fig. 24 is a schematic structural diagram II of a battery thermal runaway flue gas treatment device according to Embodiment 17.
Fig. 25 is a schematic diagram I of a battery thermal runaway flue gas cooling system according to Embodiment 18.
Fig. 26 is a schematic diagram II of a battery thermal runaway flue gas cooling system according to Embodiment 18.
In the drawings: 11. Cooling tank; 12. Adsorption tank; 13. Reflux tank; 14. Gas collection unit; 111. Cooling channel; 112. Flue gas pipe; 113. Flue gas channel; 114. Cooling inlet; 115. Cooling outlet; 116. Flue gas inlet; 117. Flue gas outlet; 118. Partition plate; 119. Smoke inlet; 120. Smoke outlet; 121. Porous plate; 122. Adsorption cavity; 123. Spring; 124. Connecting rod; 21. Battery assembly; 22. Cooling unit; 23. First adsorption unit; 24. Second adsorption unit; 25. Third adsorption unit; 26. Reflux tank; 27. Gas collection unit; 31. Reaction device; 32. Adsorption device; 33. Bent pipe; 34. Porous plate; 35. Connecting rod; 36. Spring; 37. Battery housing; 41. Cooling device; 42. Dilution device; 43. Mixing device; 44. Inductive switch; 45. Bent pipe; 46. Adsorption device; 47. Gas collection unit; 51. Cooling housing; 511. Gas inlet; 512. Gas outlet; 52. Baffle plate; 521. Channel; 53. Cooling cavity; 54. Reflux cavity; 55. Porous plate; 56. Connecting rod; 57. Positioning platform; 58. Liquid discharging valve; 61. Battery thermal runaway flue gas treatment device; 62. Soft pipe; 63. Cooling reflux tank; 64. Gas collection device; 611. cooling housing; 612. Honeycomb ceramic cylinder; 613. Gas inlet; 614. Exhaust port; 615. Spring; 616. Limiting protrusion; 6111. Intermediate cylinder; 6112. First cover plate; 6113. Second cover plate; 6114. First semi-circular housing; and 6115. Second semi-circular housing.

### Detailed Description of the Embodiments

The present invention is described in detail below with reference to the drawings and specific implementations. It should be understood by those skilled in the art that these implementations are configured only to explain the technical principles of the present invention and are not intended to limit the scope of protection of the present invention.

### Embodiment 1

A battery thermal runaway flue gas treatment device provided in this embodiment includes a cooling unit and an adsorption unit. The cooling unit includes at least one cooling tank. If there are a plurality of cooling tanks, the plurality of cooling tanks are connected in series in sequence. A cooling channel for cooling liquid to pass through and a flue gas channel for a battery thermal runaway flue gas to pass through are arranged in the cooling tank. At the same time, the cooling tank is provided with a cooling inlet and cooling outlet communicating with the cooling channel, and a flue gas inlet and flue gas outlet communicating with the flue gas channel. The cooling channel and the flue gas channel are channels independent of each other, such that the thermal runaway flue gas and the cooling liquid pass through without interfering with each other, the cooling liquid may absorb heat in the thermal runaway flue gas and cool the thermal runaway flue gas. The adsorption unit includes at least one adsorption tank. If there are a plurality of adsorption tanks, the plurality of adsorption tanks are connected in series in sequence. Each of the plurality of adsorption tanks is filled with an adsorbing material. A smoke inlet of the 1st adsorption tank communicates with the flue gas outlet of the Nth cooling tank, such that the battery thermal runaway flue gas is cooled by passing through all of the cooling tanks and then adsorbed by passing through the plurality of adsorption tanks. The battery thermal runaway flue gas treatment device provided in this embodiment may fully cool the thermal runaway flue gas by using the cooling liquid in the cooling channel, causing subsequent adsorption to be more thorough, thereby further guaranteeing the safety of a battery. The adsorption is a heat releasing process. From a thermodynamic perspective, it may be learned that the reducing of the temperature facilitates the adsorption, and the increasing of the temperature facilitates desorption. Thus, after the thermal runaway flue gas enters, liquid cooling is performed first, and the temperature after cooling may reach room temperature, so as to perform subsequent adsorption.

In the battery thermal runaway flue gas treatment device provided in this embodiment, the thermal runaway flue gas is cooled by the cooling liquid in the cooling tank. Compared with some methods of filling a solid in a cooling tank as a cooling material, liquid cooling has the advantages in terms of cooling efficiency, cost, and structures. First, the liquid medium is large in thermal capacity, power-recyclable, and good in cooling effect, and may fully cool the thermal runaway flue gas rapidly, such that compared to a solid cooling material, when the thermal runaway flue gases with the same volume are treated, liquid cooling has the characteristics of being fast in cooling speed, power-recyclable, and good in cooling effect. Then, when liquid cooling is configured, cooling liquid such as water or an ethylene glycol solution and the like is able to be specifically configured. The water or ethylene glycol solution is very low in cost relative to the solid cooling materials such as a ceramic ball, a honeycomb ceramic body, silica, etc., thereby causing the cost of the entire cooling unit to be lower. Finally, the cooling tank is able to be mounted and filled with the cooling liquid at a battery use site, such that tedious on-site filling of a solid coolant is avoided, and various compression components during the filling of the solid coolant are also saved, thereby further reducing the cost of the cooling unit.

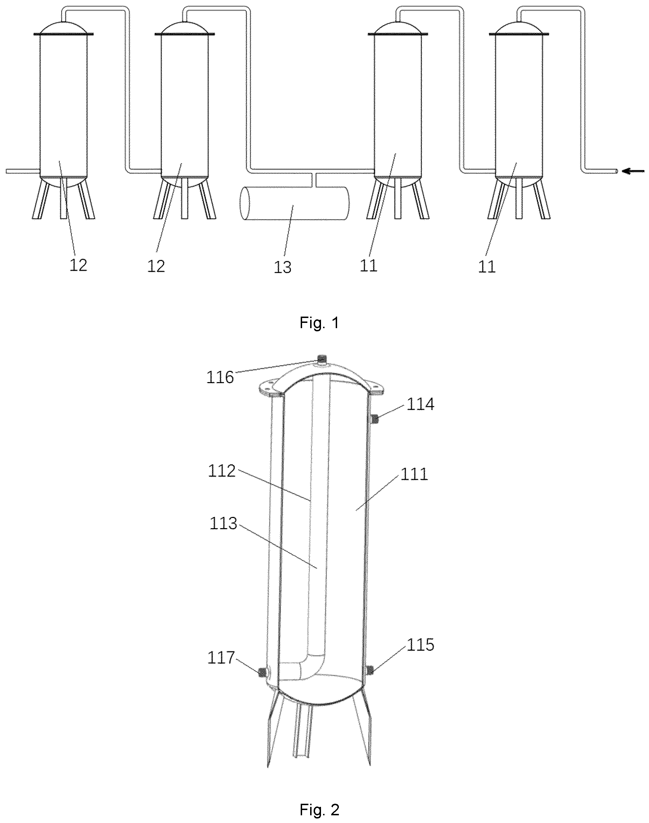

As shown in Figs. 1 to 3, the battery thermal runaway flue gas treatment device provided in this embodiment includes a cooling unit and an adsorption unit. The cooling unit includes two cooling tanks 11 connected in series in sequence. A cooling channel 111 for cooling liquid to pass through and a flue gas channel 113 for a battery thermal runaway flue gas to pass through are arranged in each of the two cooling tanks 11. The adsorption unit includes two adsorption tanks 12 connected in series in sequence. Each of the two adsorption tanks 12 is filled with an adsorbing material. A smoke inlet of the 1st adsorption tank 12 communicates with the flue gas outlet of the 2nd cooling tank 11, such that the battery thermal runaway flue gas is cooled by passing through the two cooling tanks 11 and then adsorbed by passing through the two adsorption tanks 12. At the same time, a reflux tank 13 is disposed between the smoke inlet of the 1st adsorption tank 12 and the flue gas outlet of the 2nd cooling tank 11. The reflux tank 13 collects a liquid medium after the condensation of the thermal runaway flue gas in the 2nd cooling tank 11.

As shown in Fig. 2, a flue gas pipe 112 is disposed in each of the two cooling tanks 11 in this embodiment. The flue gas pipe 112 is a straight pipe. An inner cavity of the flue gas pipe 112 is the flue gas channel 113, and an inner cavity of each of the two cooling tanks outside the flue gas pipe 112 is the cooling channel 111. That is, the cavity between an outer wall of the flue gas pipe 112 and an inner wall of each of the two cooling tanks 11 is the cooling channel 111. A cooling inlet 114 and cooling outlet 115 communicating with the cooling channel 111 are provided on a sidewall of each of the two cooling tanks 11. The cooling inlet 114 may be on an upper end or lower end of each of the two cooling tanks 11, and accordingly, the cooling outlet 115 is able to be on the lower end or upper end of each of the two cooling tanks 11. A flue gas inlet 116 of the flue gas channel 113 is on a top end of each of the two cooling tanks 11, and a flue gas outlet 117 is on a bottom end of each of the two cooling tanks 11. In this way, the arrangement of the cooling channel and the flue gas channel in each of the two cooling tanks is facilitated, causing a structure of each of the two cooling tanks to be simpler.

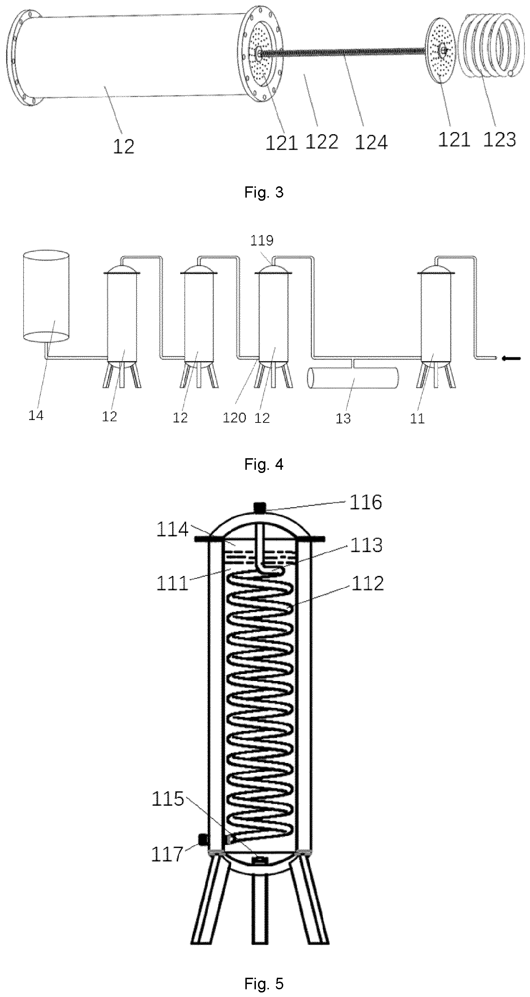

As shown in Fig. 3, in this embodiment, each of the two adsorption tanks 12 is specifically manufactured by using a circular bucket. Two ends of the circular bucket is able to be sealed by end caps (not shown in Fig. 3). There are a plurality of porous plates 121 distributed at intervals in the two adsorption tanks 12. Two adjacent porous plates 121 are axially connected through a connecting rod 124 with two threaded ends, that is, the two ends of the connecting rod 124 respectively run through the porous plates 121 and then are fixed through nuts. In this embodiment, the two adjacent porous plates 121 form an adsorption cavity 122 with the inner wall of each of the two adsorption tanks 12. If there are two porous plates 121, one adsorption cavity 122 is formed. If there are four porous plates 121, two adsorption cavities 122 are formed. The adsorbing materials are filled in part or all of the adsorption cavities. Such structure may reliably mount the adsorbing material, thereby further guaranteeing an adsorption effect. In an embodiment, a spring 123 is disposed on one or two ends of each of the two adsorption tanks 12. One end of the spring 123 is limited by the porous plate 121, and the other end is limited by each of the two adsorption tanks 12, so as to compress and compact the adsorbing material, and to achieve a buffer effect. In this embodiment, the cooling liquid is water, and each of the adsorbing materials is activated carbon, molecular sieve or alumina. Compared to adsorbing materials such as graphite, montmorillonite, silicate, phosphate, and porous glass, the use of the activated carbon, molecular sieve or alumina causes the cost of the entire device to be In an embodiment reduced.

The adsorption process is related to pressure. If the pressure is high, the adsorption is performed quickly. When the pressure increases, an adsorption phenomenon starts to be significant. Thus, after there is a shutoff pressure, an adsorbed substance is adsorbed more easily on a surface of an adsorbent. The manner that the thermal runaway flue gas enters a tank from top to bottom may achieve a shutoff pressure effect. Therefore, the smoke inlet of each of the two adsorption tanks is disposed on the top end of each of the two adsorption tanks, and a smoke outlet is disposed on the bottom end of each of the two adsorption tanks. Meanwhile, by designing the two adsorption tanks as a pressure-bearing tank body, in some embodiments, a circular tank body, sufficient adsorption is achieved, and the adsorption effect is significantly improved.

### Embodiment 2

As shown in Fig. 4 and Fig. 5, a battery thermal runaway flue gas treatment device provided in this embodiment includes a cooling unit and an adsorption unit. The cooling unit includes a cooling tank 11, a cooling channel 111 for cooling liquid to pass through and a flue gas channel 113 for a battery thermal runaway flue gas to pass through are arranged in the cooling tank 11. The adsorption unit includes three adsorption tanks 12 connected in series in sequence, and each of the three adsorption tanks 12 is filled with an adsorbing material. The cooling tank 11 is provided with a cooling inlet 114 and cooling outlet 115 communicating with the cooling channel 111, and a flue gas inlet 116 and flue gas outlet 117 communicating with the flue gas channel 113. A smoke inlet 119 of the 1st adsorption tank 12 communicates with the flue gas outlet 117 of the 1st cooling tank 11, and the battery thermal runaway flue gas is first cooled by the cooling tank 11 and then adsorbed by the three adsorption tanks 12. Meanwhile, in this embodiment, a reflux tank 13 is also disposed at the flue gas outlet 117 of the cooling tank 11. In this case, a mounting height of the reflux tank 13 is lower than a height of the flue gas outlet 117 of the cooling tank 11, so as to collect a liquid medium after condensation of the thermal runaway flue gas.

In this embodiment, a smoke outlet 120 of the last adsorption tank 12 is also connected to a gas collection unit 14, so as to collect the treated battery thermal runaway flue gas. In this way, secondary disasters such as explosions and fires caused by flammable gas leakage of a battery due to thermal runaway are avoided.

As shown in Fig. 5, the flue gas pipe 112 in this embodiment is of a spiral structure, which is a spiral tube structure. In this case, an inlet and outlet of a spiral tube respectively are the flue gas inlet 116 and the flue gas outlet 117. An open end above the cooling tank 11 is the cooling inlet 114, and a protruding pipe disposed on a lower sidewall of the cooling tank is the cooling outlet 115. The flue gas pipe 112 of the spiral structure increases the length of travel of the thermal runaway flue gas in the flue gas pipe 112, and also increases a contact area between the flue gas pipe 112 and the cooling channel 111, thereby achieving a good cooling effect.

As shown in Fig. 3, each of the three adsorption tanks 12 in this embodiment uses a circular tank with good stress and pressure resistance. There are a plurality of porous plates 121 distributed at intervals in the three adsorption tanks 12. Two adjacent porous plates 121 are axially connected through a connecting rod 124 with two threaded ends, that is, the two ends of the connecting rod 124 respectively run through the porous plates 121 and then are fixed through nuts. In this case, the two adjacent porous plates 121 form an adsorption cavity 122 with the inner wall of each of the three adsorption tanks 12. If there are two porous plates 121, one adsorption cavity 122 is formed. If there are four porous plates 121, two adsorption cavities 122 are formed. Each of the adsorbing materials is filled in part or all of the adsorption cavities. In this embodiment, a spring 123 is also disposed at a flue gas inlet section and/or outlet section of each of the three adsorption tanks 12. One end of the spring 123 is limited by the porous plate 121, and the other end is limited by each of the three adsorption tanks 12, so as to compress and compact the adsorbing material, thereby fully adsorbing the thermal runaway flue gas. Meanwhile, the structure has a buffer effect, the seismic resistance and stability of an internal structure of each of the three adsorption tanks are improved, and each of the adsorbing materials is not loosened by temperature changes, transportation, and vibration.

The adsorbing material filled in the adsorption cavity in this embodiment adsorbs the cooled flammable gas, liquid, and solid substances, such that the volume of the flammable gas discharged into an environment and a total gas volume are greatly reduced. In this way, the temperature of the flammable gas in the subsequently-discharged gas passing through the flue gas channel and the adsorption cavity may be decreased below its spontaneous ignition point, and the concentration of the gas is reduced below its lower explosive limit, such that secondary disasters such as explosions and fires to the battery caused by thermal runaway are avoided, and environmental pollution is also reduced.

### Embodiment 3

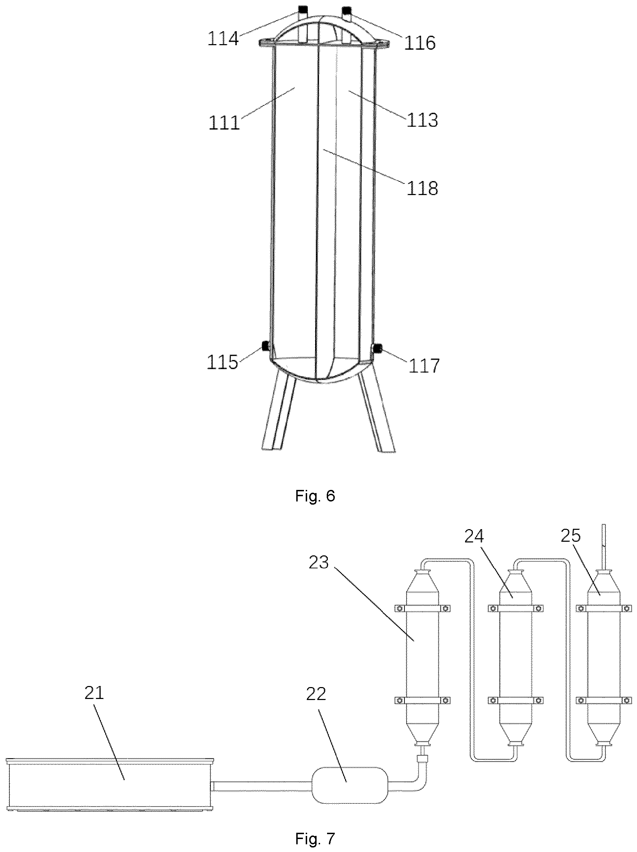

As shown in Fig. 6, a battery thermal runaway flue gas treatment device provided in this embodiment includes a cooling unit and an adsorption unit. Differences between this embodiment and Embodiment 2 lie in that, in this embodiment, a partition plate 118 is disposed in the cooling tank 11; the partition plate 118 divides the cooling tank 11 into a cooling channel 111 for cooling liquid to pass through and a flue gas channel 113 for a battery thermal runaway flue gas to pass through; the cooling channel 111 and the flue gas channel 113 are channels independent of each other; in this case, a cooling inlet 114 of the cooling channel 111 and a flue gas inlet 116 of the flue gas channel 113 are arranged on a top end of the cooling tank 11; and a cooling outlet 115 of the cooling channel 111 and a flue gas outlet 117 of the flue gas channel 113 are arranged on a bottom end of the cooling tank 11. In this embodiment, the arrangement mode and internal structures of the cooling tanks 11 and adsorption tanks 12 are not limited, as long as use requirements may be met. An adsorbing material inside each of the three adsorption tanks 12 may be partially or fully filled to meet different use requirements. A temperature and flow rate of a flue gas may be reduced when a battery thermal runaway flue gas passes through the flue gas channel, so as to increase the adsorption of the flue gas by a rear-end adsorption cavity 122, thereby ensuring that the gas coming out of a gas outlet is non-flammable.

The battery thermal runaway flue gas treatment device in Embodiment 1, Embodiment 2, and Embodiment 3 is connected to an explosion vent or an explosion pipe provided on a battery, a battery pack, or an energy storage device housing. When the explosion vent is opened due to battery thermal runaway, high temperature substances in the battery enter the flue gas channel via the explosion vent or explosion pipe, and are cooled by cooling liquid in the cooling channel, causing the activity of partial solid particles in the high temperature substances to reduce and vaporized electrolyte to condensate again. Various substances passing through the flue gas channel enter an adsorption cavity after being cooled, and all liquid and most flammable gas are adsorbed by the adsorbing material in the adsorption cavity, so as to discharge or collect the gas that is not adsorbed. The device cools, adsorbs, and then discharges the various substances generated after battery thermal runaway without causing hazards such as explosion, fire, etc.

### Embodiment 4

As shown in Fig. 7, a battery thermal runaway flue gas treatment device provided in this embodiment includes a cooling unit 22 and an adsorption unit. The cooling unit 22 is filled with a cooling material. The cooling material is honeycomb ceramic or silica, and may reduce a temperature and flow rate of a thermal runaway flue gas. The adsorption unit includes a first adsorption device 23, a second adsorption device 24, and a third adsorption device 25, which are arranged in sequence. The first adsorption device 23 is filled with an alkaline adsorbing material, so as to adsorb an acid gas. In this embodiment, the alkaline adsorbing material is an SDG-I type adsorbent or calcium oxide, and the SDG-I type adsorbent has high adsorption efficiency on the acid gas, and has a more thorough adsorption effect compared to common adsorbents. The second adsorption device 24 is filled with a polar molecule adsorbing material, so as to adsorb a polar molecule. In this embodiment, the polar molecule adsorbing material is zeolite or diatomite, and the zeolite has high adsorption efficiency on the polar molecule and a more thorough adsorption effect compared to common adsorbents. The third adsorption device 25 is filled with a non-polar molecule adsorbing material, so as to adsorb a non-polar molecule. In this embodiment, the non-polar molecule adsorbing material is activated carbon or carbon nanotubes, and the activated carbon has high adsorption efficiency on the non-polar molecule and a more thorough adsorption effect compared to common adsorbents. During specific connection, a gas inlet section of the first adsorption device 23 communicates with a gas outlet section of a cooling device 22 through a connection pipe; a gas inlet section of the second adsorption device 24 communicates with a gas outlet section of the first adsorption device 23 through a connection pipe; and a gas inlet section of the third adsorption device 25 communicates with a gas outlet section of the second adsorption device 24 through a connection pipe.

In this embodiment, the cooling unit 22, the first adsorption device 23, the second adsorption device 24, and the third adsorption device 25 are arranged in sequence. By disposing the cooling unit 22 before the adsorption device, adverse effects on the adsorption performance of the adsorbing material in the adsorption unit due to excess temperature of the thermal runaway flue gas may be avoided, and an adsorption effect of the adsorbing materials are improved, causing the adsorption to be more thorough, thereby improving the safety of the battery. The polar molecule adsorbing material in the second adsorption device 24 is an alkaline component. By disposing the first adsorption device 23 before the second adsorption device 24, acid gases such as HF, HS, HCl, PF5, etc. in the thermal runaway flue gas may be adsorbed to prevent the acid gases in the thermal runaway flue gas from reacting with the polar molecule adsorbing material to generate adverse effects on the adsorption performance of the second adsorption device 24, so as to improve the adsorption effect of the polar molecule adsorbing material, thereby improving the adsorption efficiency of the second adsorption device 24, and improving the safety of the battery. The non-polar molecule adsorbing material in the third adsorption device 25 has a non-polar surface with an affinity for non-polar molecules such as H2 and hydrocarbon in the thermal runaway flue gas. By disposing the second adsorption device 24 before the third adsorption device 25, polar molecule gases such as CO and water vapor in the thermal runaway flue gas may be adsorbed, such that the purity of non-polar molecule gases such as H₂ and hydrocarbon in the thermal runaway flue gas is improved, the adsorption effect of the polar molecule adsorbing material is improved, and the adsorption efficiency of the third adsorption device 25 is improved, thereby improving the safety of the battery. Through the above cooling and adsorption processes on the thermal runaway flue gas, high temperature flammable and harmful gases are fully adsorbed, so as to avoid hazards such as fire, explosion, etc., thereby greatly improving the safety of a battery.

### Embodiment 5

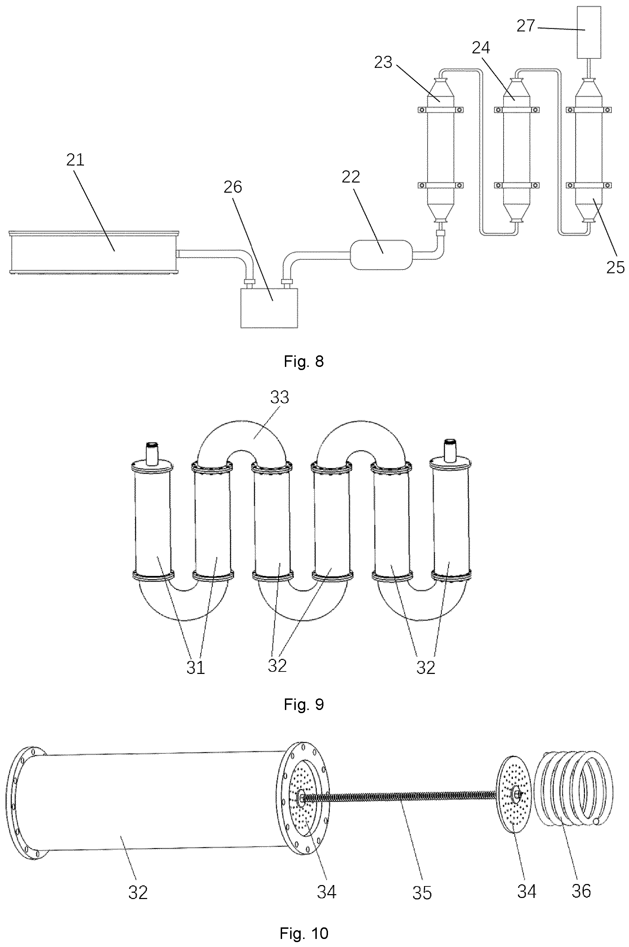

As shown in Fig. 8, a battery thermal runaway flue gas treatment device provided in this embodiment includes a cooling unit 22 and an adsorption unit. The cooling unit 22 is filled with a cooling material, and the cooling material is zirconia to reduce a temperature and flow rate of the thermal runaway flue gas. The adsorption unit includes a first adsorption device 23, a second adsorption device 24, and a third adsorption device 25, which are arranged in sequence. The first adsorption device 23 is filled with an alkaline adsorbing material. In this embodiment, the alkaline adsorbing material is an SDG-II type adsorbent, so as to adsorb an acid gas; the second adsorption device 24 is filled with a polar molecule adsorbing material, and the polar molecule adsorbing material is zeolite, so as to adsorb a polar molecule; and the third adsorption device 25 is filled with a non-polar molecule adsorbing material, and the non-polar molecule adsorbing material is activated carbon, so as to adsorb a non-polar molecule. A gas inlet section of the first adsorption device 23 communicates with a gas outlet section of a cooling device 22 through a connection pipe; a gas inlet section of the second adsorption device 24 communicates with a gas outlet section of the first adsorption device 23 through a connection pipe; and a gas inlet section of the third adsorption device 25 communicates with a gas outlet section of the second adsorption device 24 through a connection pipe.

In this embodiment, porous grid plates are disposed inside the cooling unit 22, first adsorption device 23, second adsorption device 24, and third adsorption device 25, and are configured to fix and compress the cooling material, alkaline adsorbing material, polar molecule adsorbing material, and non-polar molecule adsorbing material. It is to be noted that, the cooling material is silica, alumina, zirconia, titanium oxide, or honeycomb ceramic; the alkaline adsorbing material is an SDG-I type adsorbent, SDG-II type adsorbent, calcium oxide, or alumina; the polar molecule adsorbing material is zeolite or diatomite; and the non-polar molecule adsorbing material is activated carbon or carbon nanotubes. Specific materials may be selected or adjusted according to actual situations.

In other embodiments, the battery thermal runaway flue gas treatment device further includes a reflux tank 26. A gas outlet section of the reflux tank 26 communicates with a gas inlet section of the cooling unit 22; and a mounting height of the reflux tank 26 is lower than a mounting height of the cooling unit 22. **The** reflux tank 26 may collect condensed electrolyte, and recycle the electrolyte, such that costs are reduced; and the mounting height of the reflux tank is lower than the mounting height of the cooling unit, facilitating collection of the condensed electrolyte.

In other embodiments, the battery thermal runaway flue gas treatment device further includes a gas collection unit 27. **The** gas collection unit 27 is connected to the gas outlet section of the third adsorption device 25. **The** gas collection unit 27 may collect the adsorbed thermal runaway flue gas, so as to perform further treatment, thereby improving the safety of the battery.

### Embodiment 6

This embodiment provides a battery, including the battery thermal runaway flue gas treatment device in Embodiment 4 or Embodiment 5. An explosion vent of the battery 21 is connected to a gas inlet section of a cooling unit 22 or a gas inlet section of a reflux tank 26.

### Embodiment 7

As shown in Fig. 9, a battery thermal runaway flue gas treatment device provided in this embodiment includes a reaction unit and an adsorption unit, which are connected to each other. The reaction unit includes two reaction devices 31, different reaction substances are respectively disposed in the two reaction devices 31; the reaction substance may chemically react with a flammable gas and acid gas, to convert the flammable gas and acid gas into a non-flammable gas and a non-flammable substance, or to reduce corrosiveness of the acid gas. The adsorption unit includes four adsorption devices 32, and the four adsorption devices 32 are respectively filled with cooling materials and adsorbing materials, so as to cool and adsorb the reacted flue gas. In other embodiments, the four adsorption devices 32 are all filled with the cooling materials, so as to cool the reacted flue gas. In other embodiments, the four adsorption devices 32 are all filled with the adsorbing materials, so as to adsorb the reacted flue gas. The two reaction devices 31 and the four adsorption devices 32 are linearly arranged into a row.

As shown in Fig. 9, the adjacent reaction devices 31 and the adsorption devices 32 are connected in series through a bent pipe 33; and a buffer reflux cavity for the flue gas is formed in the bent pipe 33. In this embodiment, the arrangement mode and internal structures of the reaction device 31 and adsorption device 32 are not limited, as long as use requirements may be met. The reaction substance, cooling material, and adsorbing material inside the reaction device 31 and adsorption device 32 are able to be partially or fully filled to meet different use requirements. Shapes of the reaction device 31 and adsorption device 32 are not limited, as long as the reaction substance, cooling material, and adsorbing material are able to be filled inside the reaction device and adsorption device. In this embodiment, the reaction device 31 and adsorption device 32 use circular tanks with good stress and pressure resistance. The reaction substance is a metal oxide and an alkaline compound. The metal oxide is one or more of reduced copper oxide, cuprous oxide, ferric oxide, alumina, cobalt oxide, chromium oxide, and tungsten oxide. The alkaline compound is one or more of sodium hydroxide, potassium hydroxide, potassium bicarbonate, and a strong alkali weak acid salt. The cooling material is one or more of a ceramic ball, a honeycomb ceramic body, silica, alumina, zirconia, and titanium oxide. The adsorbing material is one or more of activated carbon, graphite, alumina, montmorillonite, silicate, phosphate, and porous glass.

As shown in Fig. 10, in this embodiment, each reaction device 31 and adsorption device 32 are provided with two porous plates 34. The two porous plates 34 are axially connected through a connecting rod 35 with two threaded ends, that is, the two ends of the connecting rod 35 respectively run through the two porous plates 34 and are fixed through nuts. The adjacent two porous plates 34 are filled with the metal oxide, alkaline compound, cooling material, and adsorbing material. A spring 36 is also disposed at a flue gas inlet section and/or outlet section of the adsorption tank. An opening aperture of the bent pipe 33 is less than a size of the porous plate 34. One end of the spring 36 is limited by the porous plate 34, and the other end is limited by the bent pipe 33, so as to compress and compact the cooling material and adsorbing material. Meanwhile, the spring 36 also has a buffer effect, such that the cooling material and adsorbing material are not loosened by temperature changes, transportation, and vibration. The battery thermal runaway flue gas chemically reacts through the reaction device 31, and then enters the adsorption device 32 for cooling and adsorption, so as to cause the gas finally coming out to be non-flammable, thereby improving a purification effect.

In other embodiments, a flue gas outlet of the last adsorption device 32 is also connected to a gas collection bag, so as to collect the treated battery thermal runaway flue gas. In this way, secondary disasters such as explosions and fires caused by flammable gas leakage of a battery due to thermal runaway are avoided.

In a high-capacity high-temperature battery thermal runaway flue gas, the flammable gas is mainly hydrogen and carbon monoxide, which account for about 50% of the total. Meanwhile, the high-temperature flue gas further includes partial acid gas, which is mainly hydrogen fluoride. Due to a small molecular weight of hydrogen, adsorption is relatively difficult, such that large amount of adsorbent is required. In this embodiment, by using the reducibility of the hydrogen and carbon monoxide, copper oxide, cuprous oxide, ferric oxide, alumina, cobalt oxide, chromium oxide, and tungsten oxide are reduced under a heating condition to generate metal elements and a carbon dioxide flammable gas, so as to reduce the proportion of the flammable gas of the runaway flue gas, thereby reducing the use amount of the adsorbent. Meanwhile, the alkaline compound is configured to react with the acid gas to convert the acid gas into a non-flammable substance. Then, small droplets of the electrolyte volatilized due to a high temperature are cooled by the cooling material such as the ceramic ball and flow back to the reflux cavity. Meanwhile, the remaining flammable gas is adsorbed through the adsorbing material such as the activated carbon, and the gas finally collected by the gas collection bag is non-flammable, such that the flammability of the flue gas may be reduced, and an adsorption effect is improved. After the thermal runaway flue gas is subjected to the above treatment, the electrolyte, flammable gas, and acid gas in the runaway flue gas of a lithium battery are adsorbed and treated as much as possible, ensuring that the treated gas is non-flammable and the corrosiveness of the gas is reduced, thereby improving a purification effect, and greatly improving the safety of the lithium battery at the same time.

### Embodiment 8

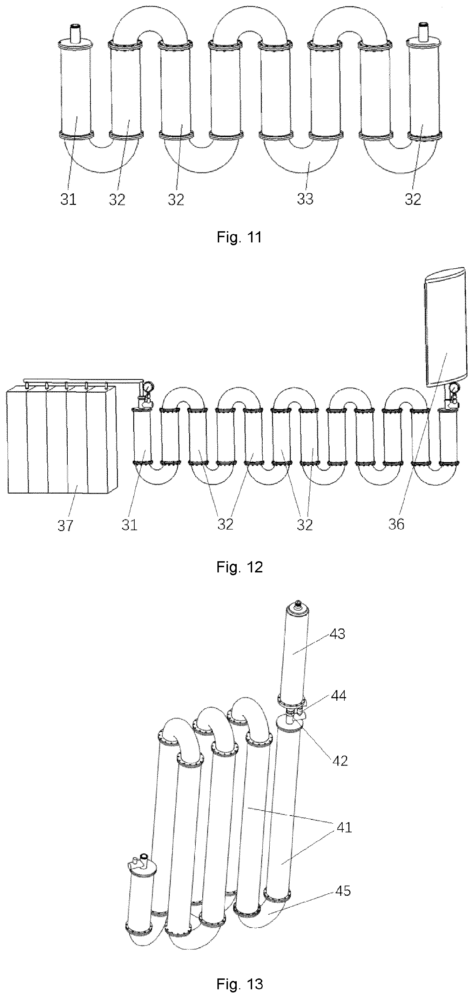

As shown in Fig. 11, a battery thermal runaway flue gas treatment device provided in this embodiment includes a reaction unit and an adsorption unit, which are connected to each other. The reaction unit includes a reaction device 31, a reaction substance is disposed in the reaction device 31; the reaction substance may chemically react with an acid gas or flammable gas, to convert the flammable gas into a non-flammable gas, and convert the acid gas into a non-flammable substance or to reduce corrosiveness of the acid gas. The adsorption unit includes seven adsorption devices 32, and the seven adsorption devices 32 are respectively filled with cooling materials and adsorbing materials, so as to cool and adsorb the reacted flue gas. The reaction device 31 and the seven adsorption devices 32 are linearly arranged into a row. In other embodiments, the seven adsorption devices 32 are all filled with the cooling materials, so as to cool the reacted flue gas.

In this embodiment, shapes of the reaction device 31 and adsorption device 32 are not limited, as long as the reaction substance, cooling material, and adsorbing material are able to be filled inside the reaction device and adsorption device. In this embodiment, the reaction device 31 and adsorption device 32 use circular tanks with good stress and pressure resistance. The reaction substance is a metal oxide or an alkaline compound. The cooling material and adsorbing material are the same as Embodiment 1. The alkaline compound is one or more of strong alkali, a strong alkali weak acid salt, and an alkaline organic compound. The strong alkali may specifically include sodium hydroxide, calcium hydroxide, potassium hydroxide, etc.; the strong alkali weak acid salt specifically includes sodium carbonate, sodium bicarbonate, sodium monohydrogen phosphate, sodium phosphate, etc.; and the alkaline organic compound specifically includes sodium alkoxide and the like. Through the use of the reaction substance, cooling material, and adsorbing material, the volume of the flammable gas discharged into an environment and a total gas volume are greatly reduced, and it ensures that the gas coming out of the gas outlet is non-flammable, thereby greatly improving the safety.

### Embodiment 9

As shown in Fig. 12, this embodiment provides a battery, including the battery thermal runaway flue gas treatment device in Embodiment 7 or Embodiment 8. The battery thermal runaway flue gas treatment device is connected to an explosion vent or an explosion pipe provided on a battery housing 37. When the explosion vent is opened due to thermal runaway in a cell in the battery housing 37, high temperature substances in the battery enter the reaction device 31 via the explosion vent or explosion pipe, and undergo a chemical reaction with the reaction substance in the reaction device 31, so as to convert the flammable gas and acid gas into a non-flammable gas and a non-flammable substance, or to reduce corrosiveness of the acid gas; then, the reacted flue gas enters the adsorption device 32 and is treated by using the cooling material and adsorbing material filled in the adsorption device, causing partial solid particles in the high temperature substances and vaporized electrolyte to condensate again; and all liquid and the remaining flammable gas are adsorbed by the adsorbing material, and small molecule gas such as nitrogen and nitrogen dioxide not adsorbed are discharged via the exhaust port. The device reaction reacts, cools, adsorbs, and then discharges the various substances generated after battery thermal runaway without causing hazards such as explosion, fire, etc.

In this embodiment, the reaction substance filled in the reaction device 31 may convert the flammable gas and the acid gas into the non-flammable gas and the non-flammable substance, such that the use amount of the cooling material and adsorbing material may be reduced. Meanwhile, under a combination of the suitable amount of the cooling material and adsorbing material, a small amount of gas discharged to an environment may achieve a colorless, odorless and non-flammable effect, such that secondary disasters such as explosions and fires to the battery caused by thermal runaway are avoided, and environmental pollution is also reduced. Since the device in this embodiment uses a physical cooling material to cool the substance ejected when battery thermal runaway occurs, such substance is good in cooling effect and stable in property, and more importantly, there is no gas generated, such that the use amount of the subsequent adsorbing material during adsorption and adsorption loads are greatly reduced.

### Embodiment 10

In a high-temperature battery thermal runaway flue gas of a high-capacity battery, the flammable gas is mainly hydrogen, carbon monoxide, methane, etc., and the proportion of the flammable gas is greater than 50%. Due to a small molecular weight of hydrogen, adsorption is relatively difficult, such that large amount of an adsorbent substance is required. Based on this, this embodiment provides a battery thermal runaway flue gas treatment device. The device mainly includes a cooling unit, a dilution unit, and a mixing device. The cooling unit includes a plurality of cooling devices connected in series; the plurality of cooling devices are filled with first cooling substances to cool the thermal runaway flue gas; and the dilution unit is configured to generate a dilution gas and/or dilution smog, and the dilution gas and/or dilution smog is mixed with the cooled thermal runaway flue gas in the mixing device. The device mainly cools, adsorbs, and dilutes the high temperature flue gas caused by battery thermal runaway, causing small droplets of the electrolyte volatilized due to the high temperature to be cooled by the cooling substance and flow back to the reflux cavity; and at the same time, the cooled flue gas is mixed with the dilution gas and/or dilution smog, such that the concentration of the flammable gas in the thermal runaway flue gas is reduced to cause the flammable gas to be non-flammable, thereby greatly improving the safety of the battery.

The above dilution unit is able to be configured to various structures, as long as the dilution gas and/or dilution smog may be generated to reduce the concentration of the flammable gas in the thermal runaway flue gas. In an embodiment, the dilution unit mainly includes a dilution device and an inductive switch; the dilution device is provided with a gas generating agent; the inductive switch starts the dilution device after sensing the thermal runaway flue gas, so as to cause the gas generating agent to generate the dilution gas. The dilution gas is a non-flammable gas such as carbon dioxide, or an inert gas such as nitrogen, as long as the thermal runaway flue gas may be diluted. The dilution gas is mixed with the cooled thermal runaway flue gas in the mixing device. In another embodiment, the dilution unit is an external gas source, and a gas in the external gas source enters the mixing device to mix with the thermal runaway flue gas, so as to dilute the thermal runaway flue gas. In another embodiment, the dilution unit mainly includes a dilution device and an inductive switch; the dilution device is provided with an aerosol generating agent; the inductive switch starts the dilution device after sensing the thermal runaway flue gas, so as to cause the dilution device to generate aerosol smog; and the aerosol smog is mixed with the cooled thermal runaway flue gas in the mixing device. The aerosol generating agent is an S-type aerosol fire extinguishing agent or K-type aerosol fire extinguishing agent, which is a solid mixture mainly consisting of an oxidant, a reducing agent, an adhesive, and an additive. The inductive switch starts the dilution device after sensing airflow, and aerosol smog released by the dilution device is fully mixed with the thermal runaway flue gas, so as to reduce the concentration of the flammable gas until the flammable gas is non-flammable.

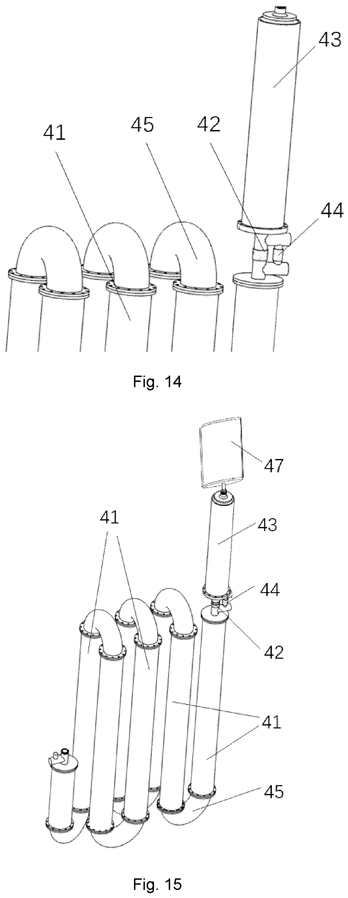

As shown in Fig. 13 and Fig. 14, the battery thermal runaway flue gas treatment device provided in this embodiment includes the cooling unit, the dilution unit, and the mixing device 43. The cooling unit includes eight cooling devices 41 connected in series; and the eight cooling devices 41 are filled with first cooling substances, and the first cooling substances are physical cooling substances, which are at least one of ceramic balls, honeycomb ceramic bodies, silica, alumina, zirconia, or titanium oxide, and may cool the thermal runaway flue gas. The dilution unit includes a dilution device 42 and an inductive switch 44, in an embodiment, the inductive switch 44 is a flow switch. The dilution device 42 is disposed above the 8th cooling device 41. An outlet of the 8th cooling device 41 communicates with an outlet of the dilution device 42 through a bypass pipeline, and the inductive switch 44 is currently disposed on the bypass pipeline. The dilution device 42 is provided with an aerosol generating agent; the inductive switch 44 starts the dilution device 42 after sensing the thermal runaway flue gas, so as to cause the dilution device 42 to generate aerosol smog; and the aerosol smog is mixed with the cooled thermal runaway flue gas in the mixing device 43, so as to reduce the concentration of the flammable gas in the thermal runaway flue gas to cause the flammable gas to be non-flammable.

In this embodiment, shapes of the cooling device 41 and dilution device 42 are not limited, as long as the cooling substance and aerosol generating agent are able to be filled inside the cooling device and dilution device, and the cooling device and dilution device use circular tanks with good stress and pressure resistance. The adjacent cooling devices 41 are connected in series through bent pipe 45 or a soft pipe, a buffer reflux cavity for the flue gas is formed in the bent pipe 45. Two porous plates are disposed in each of the eight cooling devices 41. The two porous plates are axially connected through a connecting rod with two threaded ends, that is, the two ends of the connecting rod respectively run through the porous plates and are fixed through nuts. Each of the first cooling substances is filled in the adjacent two porous plates. The dilution device 42 is of a circular tank structure, with internally filled with the aerosol generating agent. An ignition device is disposed on the top of the aerosol generating agent. When the cooled thermal runaway flue gas passes through the inductive switch 44, the ignition device starts, and the aerosol generating agent is ignited to generate the aerosol smog. The aerosol smog is mixed with the cooled thermal runaway flue gas in the mixing device 43, to reduce the concentration of the flammable gas to cause the flammable gas to be non-flammable, thereby avoiding safety accidents.

### Embodiment 11

As shown in Fig. 15, a battery thermal runaway flue gas treatment device provided in this embodiment includes a cooling unit, a dilution unit, and a mixing device 43. The cooling unit includes 8 cooling devices 41 connected in series. The dilution unit includes a dilution device 42 and an inductive switch 44. The arrangement of the cooling device 41 and dilution device 42 is the same as Embodiment 10. A difference between this embodiment and Embodiment 10 lies in that, in this embodiment, a second cooling substance is disposed in the dilution device 42 and/or mixing device 43, so as to cool a dilution gas, dilution smog and/or mixed gas again. Each of the first cooling substances is a physical cooling substance; and each of the second cooling substances is a physical cooling substance and/or a chemical cooling substance. The physical cooling substance is at least one of a ceramic ball, a honeycomb ceramic body, silica, alumina, zirconia, or titanium oxide; and the chemical cooling substance is at least one of metal carbonate or basic carbonate. For example, potassium carbonate, sodium carbonate, sodium bicarbonate, manganese carbonate, basic magnesium carbonate, basic copper carbonate, and an adhesive are materials such as hydroxyethyl cellulose or compound materials.

In this embodiment, the dilution device 42 is of a tank structure, with internally filled with an aerosol generating agent. The aerosol generating agent is a cold aerosol fire extinguishing agent, and aerosol smog is generated by dispersing solid/liquid particles through airflow. When the cooled thermal runaway flue gas passes through the inductive switch 44, the aerosol generating agent generates the aerosol smog. The aerosol smog is mixed with the cooled thermal runaway flue gas in the mixing device 43, to reduce the concentration of the flammable gas to cause the flammable gas to be non-flammable, thereby avoiding safety accidents. In an embodiment, the aerosol smog is cooled and then mixed with the cooled thermal runaway flue gas in the mixing device 43, or the diluted mixed flue gas is directly cooled, so as to avoid secondary disasters due to excess temperatures.

As shown in Fig. 15, in this embodiment, a flue gas outlet of the mixing device 43 is also connected to a gas collection unit 47, so as to collect the treated battery thermal runaway flue gas. In this way, secondary disasters such as explosions and fires caused by flammable gas leakage of a battery due to thermal runaway are avoided.

### Embodiment 12

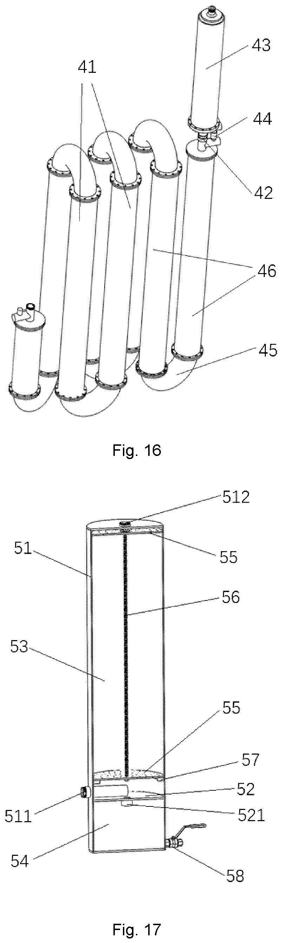

As shown in Fig. 16, a battery thermal runaway flue gas treatment device provided in this embodiment includes a cooling unit, an adsorption unit, a dilution unit, and a mixing device 43. The cooling unit includes six cooling devices 41 connected in series, and the six cooling devices 41 are filled with first cooling substances. The adsorption unit includes two adsorption devices 46. The two adsorption devices 46 are arranged on an outlet end of the 6th cooling device 41, and an adsorbent substance is disposed internally. The adsorbent substance is a combination of one or more of activated carbon, graphite, alumina, montmorillonite, silicate, phosphate, and porous glass. The dilution unit includes a dilution device 42 and an inductive switch 44, and the inductive switch 44 is a flow switch. The dilution device 42 is disposed above the 2nd adsorption device 46. An outlet of the 2nd adsorption device 46 communicates with an outlet of the dilution device 42 through a bypass pipeline, and the inductive switch 44 is disposed on the bypass pipeline. The dilution device 42 is provided with an aerosol generating agent; the inductive switch 44 starts the dilution device 42 after sensing the thermal runaway flue gas, so as to cause the dilution device 42 to generate aerosol smog; and the aerosol smog is mixed with the cooled thermal runaway flue gas in the mixing device 43. In this embodiment, the thermal runaway flue gas is first cooled and adsorbed, and then, the adsorbed thermal runaway flue gas is mixed with a dilution gas and/or a dilution smog in the mixing device 43, so as to reduce a concentration of the flammable gas in the thermal runaway flue gas, causing the flammable gas to be non-flammable.

In this embodiment, the dilution unit or mixing device 43 is also provided with a second cooling substance, so as to cool the dilution gas and/or the dilution smog or mixed gas. The first cooling substance and second cooling substance are physical cooling substances. The physical cooling substance is at least one of a ceramic ball, a honeycomb ceramic body, silica, alumina, zirconia, or titanium oxide. In this embodiment, under a combination of the suitable amount of the cooling substance and adsorbing material, a small amount of gas discharged to an environment may achieve a colorless, odorless and non-flammable effect, such that secondary disasters such as explosions and fires to the battery caused by thermal runaway are avoided, and environmental pollution is also reduced. Since the device in this embodiment uses a physical cooling material to cool the substance ejected when battery thermal runaway occurs, such substance is good in cooling effect and stable in property, and more importantly, there is no gas generated, such that the use amount of the subsequent adsorbing material during adsorption and adsorption loads are greatly reduced.

In the battery thermal runaway flue gas treatment device provided in this embodiment, the adjacent cooling devices 41 and adsorption devices 46 are assembled through a bent pipe 45, making the reaction device and adsorption device easy to mount and dismount and suitable for most existing single batteries and assembled batteries, and changes in the structure of an existing battery are not required, such that the battery thermal runaway flue gas treatment device is low in treatment cost and wide in application range.

### Embodiment 13

This embodiment provides a battery, including the battery thermal runaway flue gas treatment device in Embodiment 10, Embodiment 11 or Embodiment 12. The battery thermal runaway flue gas treatment device is connected to an explosion vent or an explosion pipe provided on a battery housing. When the explosion vent is opened due to thermal runaway in a cell in the battery housing, high temperature substances in the battery enter the cooling device 41 via the explosion vent or explosion pipe, and are treated by the cooling substance in the cooling device 41, causing partial solid particles in the high temperature substances and vaporized electrolyte to condensate again, or all liquid and the remaining flammable gas are adsorbed by the adsorbing material, and the gas not adsorbed is mixed with the aerosol smog in the dilution device 42. After the thermal runaway flue gas is subjected to the above treatment, the electrolyte, flammable gas, and acid gas in the thermal runaway flue gas are adsorbed, diluted, and treated as much as possible, so as to ensure the treated gas is non-flammable, and then are discharged without causing hazards such as explosion, fire, etc., thereby improving the safety of the battery.

### Embodiment 14

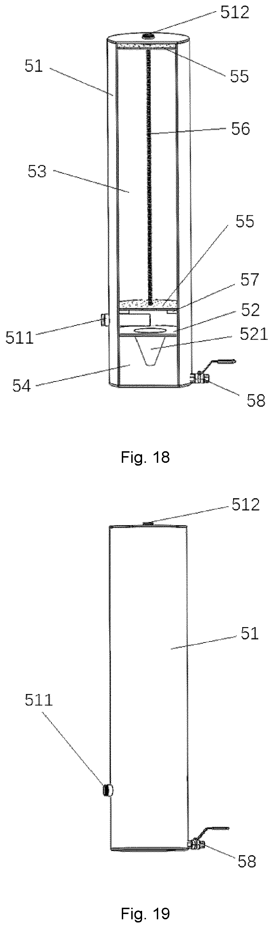

As shown in Fig. 17 and Fig. 19, this embodiment provides a battery thermal runaway flue gas treatment device, including a cooling housing 51 and a cooling material. A baffle plate 52 is disposed in the cooling housing 51; the baffle plate 52 divides an inner cavity of the cooling housing 51 into a cooling cavity 53 and a reflux cavity 54; the cooling material is filled in the cooling cavity 53 to cool the thermal runaway flue gas; and the cooling material is a physical cooling material, which may specifically be at least one of a ceramic ball, a honeycomb ceramic body, silica, alumina, zirconia, or titanium oxide, and may cool the thermal runaway flue gas.

Two porous plates 55 are disposed in the cooling cavity 53; the two porous plates 55 are axially connected through a connecting rod 56; and the cooling material is filled between the two porous plates 55. A positioning platform 57 is disposed in the cooling housing 51, and configured to axially position the porous plates 55. The baffle plate 52 is provided with a channel 521; the reflux cavity 54 is located below the cooling cavity 53 and configured to collect the cooled electrolyte; the cooling housing 51 is also provided with a gas inlet 511 and a gas outlet 512; and the gas inlet 511 is disposed above the baffle plate 52, and the gas outlet 512 is disposed on a top end of the cooling housing 51. When thermal runaway occurs in a battery, the thermal runaway flue gas enters the cooling housing 51 via the gas inlet 511, is cooled by the cooling material, and is discharged via the gas outlet 512; and the cooled electrolyte flows into the reflux cavity 54. A liquid discharging valve 58 is further disposed on the cooling housing 51, and is configured to discharge the electrolyte in the reflux cavity 54.

In this embodiment, the thermal runaway flue gas is cooled by the cooling material, the electrolyte volatilized due to the high temperature is cooled by the cooling material and flows back to the reflux cavity, so as to reduce the concentration and proportion of the flammable gas in the thermal runaway flue gas, causing the gas coming out of the gas outlet to be non-flammable, thereby greatly improving the safety of the battery. The reflux cavity is disposed below the cooling cavity and configured to collect the cooled electrolyte, such that the electrolyte in the high temperature thermal runaway flue gas may be prevented, after being cooled and liquefied, from being vaporized by the new high temperature flue gas to bring into the flue gas channel again, causing the treatment to be more thorough.

As shown in Fig. 18, in other embodiments, the baffle plate 52 is of a funnel-shaped structure, facilitating the flowing of the cooled electrolyte into the reflux cavity 54 under the action of gravity. The cooling housing 51 is a cylindrical cooling housing with good pressure resistance and a stable structure, which may bear a high pressure generated by the thermal runaway flue gas.

### Embodiment 15

This embodiment provides a battery thermal runaway flue gas cooling system, including three battery thermal runaway flue gas treatment devices in Embodiment 14. The three battery thermal runaway flue gas treatment devices are connected in series through a soft pipe. A gas outlet of the 1st battery thermal runaway flue gas treatment device and a gas inlet of the 2nd battery thermal runaway flue gas treatment device are connected in series through the soft pipe; a gas outlet of the 2nd battery thermal runaway flue gas treatment device and a gas inlet of the 3rd battery thermal runaway flue gas treatment device are connected in series through the soft pipe; and the entire system has one gas inlet and one gas outlet after series connection. The specific number of the battery thermal runaway flue gas treatment devices is able to be adjusted according to actual requirements.

This embodiment further provides a battery, including the battery thermal runaway flue gas treatment device in Embodiment 14 or the battery thermal runaway flue gas cooling system, and the gas inlet is connected to an explosion vent of a battery housing.

### Embodiment 16

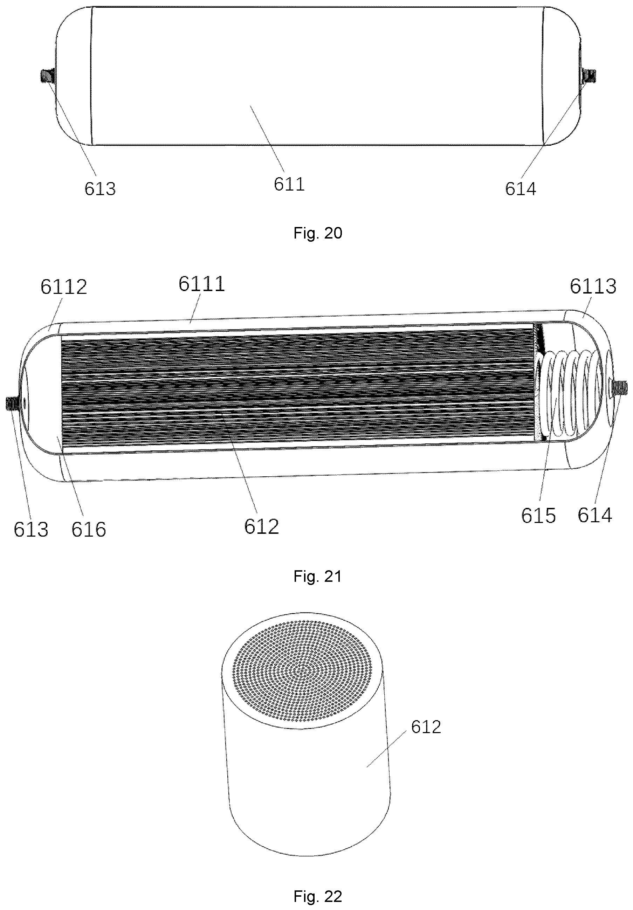

As shown in Figs. 20 to 22, a battery thermal runaway flue gas treatment device provided in this embodiment includes a cooling housing 611 and a honeycomb ceramic cylinder 612. The cooling housing is of a combined structure, which is formed through a plurality of sections, that is, the cooling housing at least includes a first housing and a second housing; the first housing and the second housing are enclosed to form a closed cavity; the honeycomb ceramic cylinder is disposed in the closed cavity; the first housing and/or the second housing is provided with a gas inlet and an exhaust port; and the thermal runaway flue gas enters the cooling housing through the gas inlet, is cooled through the honeycomb ceramic cylinder, and is discharged through the exhaust port.

In this embodiment, the structure of the cooling housing is not limited, as long as the honeycomb ceramic cylinder is able to be mounted. The cooling housing is a rectangular housing, a circular housing, an elliptical housing, or the like. The cooling housing 611 uses a circular tank with good stress and pressure resistance, and specifically includes an intermediate cylinder 6111, a first cover plate 6112, and a second cover plate 6113. The first cover plate 6112 and the second cover plate 6113 are arranged on two ends of the intermediate cylinder 6111, and are in threaded connection through the intermediate cylinder 6111, so as to form a closed mounting cavity. A gas inlet 613 is provided on the first cover plate 6112, and an exhaust port 614 is provided on the second cover plate 6113. Correspondingly, the honeycomb ceramic cylinder 612 is of a cylindrical structure, and a cylinder is filled in the cooling housing 611. The thermal runaway flue gas enters the cooling housing 611 via the gas inlet 613 to realize cooling, and is discharged via the exhaust port 614.

In order to realize reliable mounting of the honeycomb ceramic cylinder 612, a limiting protrusion 616 is disposed on one end of the cooling housing 611. The limiting protrusion 616 is configured to limit the honeycomb ceramic cylinder 612. A spring 615 is disposed in the cooling housing 611; and the spring 615 is disposed on the other end of the honeycomb ceramic cylinder 612, and configured to buffer and protect the honeycomb ceramic cylinder 612. In another embodiment, the springs is disposed on two ends of the honeycomb ceramic cylinder, and configured to buffer and protect the honeycomb ceramic cylinder.

In this embodiment, the device uses a physical cooling material to cool the substance ejected when battery thermal runaway occurs, and such substance is good in cooling effect and stable in property, and there is no gas generated. After the battery thermal runaway flue gas treatment device cools and adsorbs the thermal runaway flue gas, the volume of the flammable gas discharged into an environment and a total gas volume are greatly reduced. In this way, the temperature of the flammable gas in the gas discharged after cooling may be decreased below its spontaneous ignition point, and the concentration of the gas is reduced below its explosive limit, such that secondary disasters such as explosions and fires to the battery caused by thermal runaway are avoided, and environmental pollution is also reduced.

### Embodiment 17

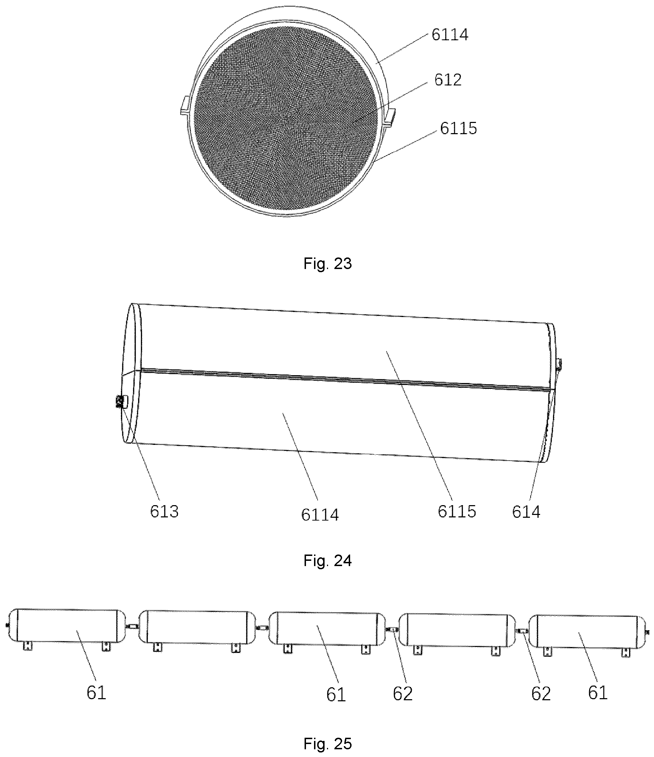

As shown in Fig. 23 and Fig. 24, a battery thermal runaway flue gas treatment device provided in this embodiment includes a cooling housing 611 and a honeycomb ceramic cylinder 612. The cooling housing 611 uses a circular tank with good stress and pressure resistance, and specifically includes a first housing and a second housing. The first housing and the second housing are a first semi-circular housing 6114 and a second semi-circular housing 6115. The two semi-circular housings are snapped together to form a mounting cavity. The first semi-circular housing 6114 and the second semi-circular housing 6115 may be connected through a flange, or connected through a fastener. In this case, the first semi-circular housing and the second semi-circular housing are respectively provided with a gas inlet 613 or an exhaust port 614, or the gas inlet 613 and the exhaust port 614 are disposed on the same semi-circular housing. Correspondingly, the honeycomb ceramic cylinder 612 is of a cylindrical structure, and a cylinder is filled in the cooling housing 611. In addition, a metal coating is disposed on a porous structure of the honeycomb ceramic cylinder 612, and is configured to adsorb a flammable gas. The metal coating is at least one of a rhodium layer, a platinum layer, or a palladium layer. The thermal runaway flue gas enters the cooling housing 611 via the gas inlet 613, and is cooled by the honeycomb ceramic cylinder 612. The flammable gas such as carbon monoxide, hydrocarbon, hydrogen, etc. is adsorbed through metal coating.

In this embodiment, the honeycomb ceramic cylinder is a base material. A precious metal coating layer containing a metal catalyst platinum, rhodium, and palladium is coated, such that the honeycomb ceramic cylinder may not only cool the thermal runaway flue gas, but also treat the flammable gas such as carbon monoxide, hydrocarbon, hydrogen, etc. Therefore, the heat of the flue gas may be absorbed, and the total volume of the volatilized gas may be reduced, thereby causing the gas discharged by the exhaust port to be non-flammable.

### Embodiment 18

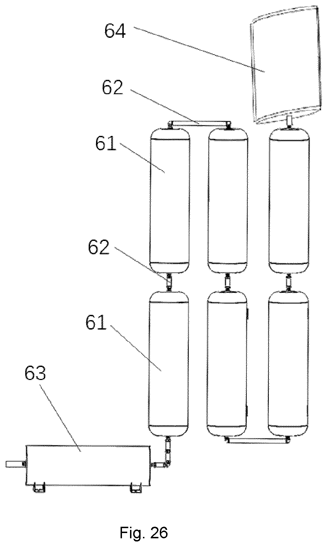

As shown in Fig. 25 and Fig. 26, this embodiment provides a battery thermal runaway flue gas cooling system, including a plurality of battery thermal runaway flue gas treatment devices 61 in Embodiment 16 or Embodiment 17, and the plurality of battery thermal runaway flue gas treatment devices 61 are connected in series through a soft pipe 62. In this embodiment, the arrangement mode of the cooling housing 611 is not limited, as long as use requirements may be met. A honeycomb ceramic cylinder 612 inside housing 611 is partially or fully filled to meet different use requirements. The battery thermal runaway flue gas cooling system prolongs a length of travel through which the flue gas passes, a space is saved, and convenient assembly is realized. In another embodiment, a cooling reflux tank 63 is disposed at a gas inlet of the 1st cooling housing 611, and configured to store electrolyte; and an exhaust port 614 of the Nth cooling housing 611 is connected to a gas collection device 64. In this way, secondary disasters such as explosions and fires caused by flammable gas leakage of a battery due to thermal runaway are avoided. The N cooling tanks are assembled through the soft pipe 62, making each of the N cooling tanks easy to mount and dismount and suitable for most existing single batteries and assembled batteries, and changes in the structure of an existing battery are not required, such that the battery thermal runaway flue gas treatment device is low in treatment cost and wide in application range. Arrangement may be performed according to the requirements of a mounting space, thereby meeting various mounting requirements, and saving the space.

This embodiment further provides a battery, including the battery thermal runaway flue gas treatment device 61 in Embodiment 16 and Embodiment 17, or including the battery thermal runaway flue gas cooling system. The gas inlet 613 of the battery thermal runaway flue gas treatment device 61 is connected to an explosion vent or an explosion pipe provided on a battery housing or a battery box. When the explosion vent is opened due to thermal runaway in a cell in the battery housing, high temperature substances in the battery enter the battery thermal runaway flue gas treatment device 61 via the explosion vent or explosion pipe, and are cooled by a honeycomb ceramic cylinder 612 in the battery enter the battery thermal runaway flue gas treatment device 61, causing partial solid particles in the high temperature substances and vaporized electrolyte to condensate again. Meanwhile, a metal coating may treat the flammable gas such as carbon monoxide, hydrocarbon, hydrogen, etc., and small molecule gas such as nitrogen and nitrogen dioxide not adsorbed are discharged via the exhaust port 614. The device cools, adsorbs, and then discharges the various substances generated after battery thermal runaway without causing hazards such as explosion, fire, etc.

The battery thermal runaway flue gas treatment device of the present invention further includes a battery thermal runaway flue gas liquid processing agent. The battery thermal runaway flue gas liquid processing agent is mainly composed of one or more of an electrolyte adsorbent, a flammable gas processing agent, and an acid gas processing agent; the electrolyte adsorbent is a liquid that is able to be miscible with electrolyte, and is configured to adsorb the electrolyte in the thermal runaway flue gas, so as to terminate the decomposition and volatilization of the electrolyte; the flammable gas processing agent is a liquid that is able to dilute a flammable gas in the thermal runaway flue gas; and the acid gas processing agent is a liquid that is able to treat an acid gas in the thermal runaway flue gas, so as to cause the acid gas to be non-flammable. The electrolyte adsorbent is an electrolyte activity inhibitor; the flammable gas processing agent is a liquid flame retardant; and the above acid gas processing agent is an ionic liquid. The electrolyte activity inhibitor is a liquid that has a high boiling point (over 150 degrees Celsius) and is miscible with electrolyte, and is configured to adsorb the electrolyte in the thermal runaway flue gas. In an embodiment, the electrolyte activity inhibitor is one or more of liquid organic ether, ethylene glycol, and 107 silicone rubber. The liquid flame retardant is configured to dilute the flammable gas in the thermal runaway flue gas to reduce flammability. The ionic liquid is configured to treat the acid gas in the thermal runaway flue gas to effectively reduce the flammability. When the thermal runaway flue gas is treated, one of the electrolyte activity inhibitor, the liquid flame retardant, and the ionic liquid are able to be configured separately, or be configured in combination. The liquid adsorbent is easy to store, not easy to volatilize in a normal temperature state, and treats the thermal runaway flue gas by mainly using the liquid miscible with the electrolyte and/or flammable gas, such that the flammability of the flue gas may be reduced, and an adsorption effect is improved.

In this embodiment, the electrolyte activity inhibitor is mainly intended to dissolve small droplets of the electrolyte vaporized after battery thermal runaway, and has the advantages of being high in boiling point, not easy to volatilize, and miscible with the electrolyte; the temperature of the electrolyte is reduced; and the electrolyte is terminated to continuously decompose and volatilize the flammable gas. The liquid flame retardant is mainly intended to reduce the flammability of the electrolyte and the flammable concentration of the flammable gas, and has the advantages of being miscible with the electrolyte, and reduces the temperature of the electrolyte. The ionic liquid is mainly intended to remove small amounts of the flammable acid gas hydrogen fluoride through reactions, and has the advantages of being low in cost and easy to obtain, and reduces the concentration of the flammable gas. **The** above three liquid substances are able to be configured in combination, or be configured separately. After the thermal runaway flue gas passes through the above adsorption liquid, the electrolyte, flammable gas, and the acid gas in the runaway flue gas of a lithium battery are adsorbed and treated as much as possible, ensuring that the treated gas is non-flammable, thereby improving a purification effect, and greatly improving the safety of the lithium battery at the same time.

### Embodiment 19

A battery thermal runaway flue gas liquid processing agent provided in this embodiment is mainly composed of an electrolyte activity inhibitor, a liquid flame retardant, and an ionic liquid. **The** electrolyte activity inhibitor is a liquid that has a boiling point of over 150 degrees Celsius and is miscible with electrolyte, specifically includes one or more of liquid organic ether, ethylene glycol, and 107 silicone rubber, and is configured to adsorb the electrolyte in the thermal runaway flue gas. **The** liquid flame retardant is configured to dilute a flammable gas in the thermal runaway flue gas to reduce flammability, and specifically includes one or more of ethyl benzoate, trimethyl phosphate, tributyl phosphate, tri(fluoroethyl) phosphate, dimethyl phosphate, isopropylphenyl phosphate, cresyl diphenyl phosphate, diphenyl octyl phosphate, alkyl phosphate, hexamethylphosphoramide, tris(2,2,2-trifluoroethyl) phosphite, fluorinated acrylate, dimethyl formate, methyl acetate, methyl propionate, and γ-butyrolactone. **The** ionic liquid is configured to treat an acid gas in the thermal runaway flue gas, and includes one or more of imidazoles, quaternary ammonium salts, pyridines, and pyrazoles. In this embodiment, the battery thermal runaway flue gas liquid processing agent includes components with the following volume parts: 20-50 parts of the electrolyte activity inhibitor, 30-60 parts of the liquid flame retardant, and 5-30 parts of the ionic liquid, in an embodiment, 35-50 parts of the electrolyte activity inhibitor, 45-60 parts of the liquid flame retardant, and 5-20 parts of the ionic liquid. In another embodiment, a volume ratio of the electrolyte activity inhibitor, the liquid flame retardant, and the ionic liquid is 1:1:0.2, that is, 45 parts of the electrolyte activity inhibitor, 45 parts of the liquid flame retardant, and 9 parts of the ionic liquid. After the thermal runaway flue gas passes through the above adsorption liquid, the electrolyte, flammable gas, and the acid gas in the runaway flue gas of a lithium battery are adsorbed and treated as much as possible, ensuring that the treated gas is non-flammable, thereby improving a purification effect, and greatly improving the safety of the lithium battery at the same time. **The** treated gas is a non-flammable and safe gas.

### Embodiment 20

A battery thermal runaway flue gas liquid processing agent provided in this embodiment is mainly composed of two of an electrolyte activity inhibitor, a liquid flame retardant, and an ionic liquid. **The** electrolyte activity inhibitor is a liquid that has a boiling point of over 150 degrees Celsius and is miscible with electrolyte, specifically includes one or more of liquid organic ether, ethylene glycol, and 107 silicone rubber, and is configured to adsorb the electrolyte in the thermal runaway flue gas. **The** liquid flame retardant is configured to dilute a flammable gas in the thermal runaway flue gas to reduce flammability, and specifically includes one or more of ethyl benzoate, trimethyl phosphate, tributyl phosphate, tri(fluoroethyl) phosphate, dimethyl phosphate, isopropylphenyl phosphate, cresyl diphenyl phosphate, diphenyl octyl phosphate, alkyl phosphate, hexamethylphosphoramide, tris(2,2,2-trifluoroethyl) phosphite, fluorinated acrylate, dimethyl formate, methyl acetate, methyl propionate, and γ-butyrolactone. **The** ionic liquid is configured to treat an acid gas in the thermal runaway flue gas, and may specifically include one or more of imidazoles, quaternary ammonium salts, pyridines, and pyrazoles. In this embodiment, the battery thermal runaway flue gas liquid processing agent includes components with the following volume parts: 20-50 parts of the electrolyte activity inhibitor and 30-60 parts of the liquid flame retardant, or 20-50 parts of the electrolyte activity inhibitor and 5-30 parts of the ionic liquid, or 30-60 parts of the liquid flame retardant and 5-30 parts of the ionic liquid, in an embodiment, 35-50 parts of the electrolyte activity inhibitor and 45-60 parts of the liquid flame retardant, or 35-50 parts of the electrolyte activity inhibitor and 5-20 parts of the ionic liquid, or 45-60 parts of the liquid flame retardant and 5-20 parts of the ionic liquid, and in another embodiment, the volume ratio of the electrolyte activity inhibitor, the liquid flame retardant, and the ionic liquid is 1:1:0.2. After the thermal runaway flue gas passes through the above adsorption liquid, the electrolyte, flammable gas, and the acid gas in the runaway flue gas of a lithium battery are adsorbed and treated as much as possible, ensuring that the treated gas is non-flammable, thereby improving a purification effect, and greatly improving the safety of the lithium battery at the same time. The treated gas is a non-flammable and safe gas.

### Embodiment 21

A battery thermal runaway flue gas liquid processing agent provided in this embodiment is mainly composed of an electrolyte activity inhibitor. The electrolyte activity inhibitor is one or more of liquid organic ether, ethylene glycol, and 107 silicone rubber. Such substances are good in solubility and relatively high in boiling point, and may reduce the concentration of a flammable product such as carbon monoxide. The liquid organic ether specifically includes one or more of methyl perfluoroisobutyl ether, 1,2-dimethoxyethane (DME), diglyme, dimethoxymethane (DMM), methyl nonafluorobutyl ether (MFE), tetrahydrofuran (THF), ethyl/methyl tetrahydrofuran (2-Me-THF), benzenes, and biphenyl. In this embodiment, the above liquid are able to be combined randomly, and the volume part of the liquid organic ether, ethylene glycol, and 107 silicone rubber is not limited. Since the electrolyte activity inhibitor is a liquid that has a boiling point of over 150 degrees Celsius and is miscible with electrolyte, may be miscible with the electrolyte carried in the thermal runaway flue gas, and is non-volatile at normal temperature, the electrolyte in the thermal runaway flue gas is fully absorbed to avoid further combustion of the electrolyte in the thermal runaway flue gas, resulting in potential safety hazards.

### Embodiment 22

A battery thermal runaway flue gas liquid processing agent provided in this embodiment is mainly composed of a liquid flame retardant. The liquid flame retardant is a flame retardant material for reducing flammability, and specifically includes one or more of ethyl benzoate, trimethyl phosphate (TMP), tributyl phosphate (TBP), tri(fluoroethyl) phosphate (TFP), dimethyl phosphate (DMMP), isopropylphenyl phosphate (IPPP), cresyl diphenyl phosphate (CDP), diphenyl octyl phosphate (DPOF), alkyl phosphate, hexamethylphosphoramide (HMPA), tris(2,2,2-trifluoroethyl) phosphite (TTFP), fluorinated acrylate, dimethyl formate (MF), methyl acetate, methyl propionate (MP), and γ-butyrolactone (GBL). In this embodiment, the above liquid are able to be combined randomly, and the volume parts of various components in the liquid flame retardant are not limited. In an embodiment, one or more of trimethyl phosphate, tributyl phosphate, tri(fluoroethyl) phosphate, and dimethyl phosphate. The liquid flame retardant is mainly intended to reduce the flammability of the electrolyte and the flammable concentration of the flammable gas, and has the advantages of being miscible with the electrolyte, reduces the temperature of the electrolyte, may dilute the flammable gas in the thermal runaway flue gas to reduce flammability, such that the flammability of the treated flue gas is greatly reduced, a purification effect is improved, and at the same time, the safety of a lithium battery is greatly improved.

### Embodiment 23

A battery thermal runaway flue gas liquid processing agent provided in this embodiment is mainly composed of an ionic liquid. The ionic liquid has the following characteristics of being high in stability, and may not be decomposed at 200 °C. The ionic liquid is non-flammable, free of corrosiveness, and good in chemical or electrochemical stability. Therefore, the ionic liquid may treat an acid gas in a thermal runaway flue gas, so as to improve a purification effect, thereby greatly improving the safety of a lithium battery. The ionic liquid includes one or more of imidazoles, quaternary ammonium salts, pyridines, and pyrazoles. The above liquid may remove small amounts of the flammable acid gas hydrogen fluoride through reactions, and has the advantages of being low in cost and easy to obtain, and reduces the concentration of the flammable gas.

### Embodiment 24

An application of a battery thermal runaway flue gas liquid processing agent in treatment of a lithium battery thermal runaway flue gas is also provided. The battery thermal runaway flue gas liquid processing agent is the liquid adsorbent in Embodiment 19, Embodiment 20, Embodiment 21, Embodiment 22, or Embodiment 23.

## Claims

1. A battery thermal runaway flue gas treatment device, configured to treat a thermal runaway flue gas generated after thermal runaway of a battery.

2. The battery thermal runaway flue gas treatment device as claimed in claim 1, wherein the battery thermal runaway flue gas treatment device comprises a cooling unit and an adsorption unit, wherein the cooling unit comprises N cooling tanks connected in series in sequence, a cooling channel for cooling liquid to pass through and a flue gas channel for the thermal runaway flue gas to pass through are arranged in each of the N cooling tanks; at the same time, each of the N cooling tanks is provided with a cooling inlet and a cooling outlet communicating with the cooling channel, and a flue gas inlet and a flue gas outlet communicating with the flue gas channel, wherein N is an integer greater than or equal to 1; the adsorption unit comprises M adsorption tanks connected in series in sequence, and each of the M adsorption tanks is filled with an adsorbing material, wherein M is an integer greater than or equal to 1; and a smoke inlet of a 1st adsorption tank of the M adsorption tanks communicates with a flue gas outlet of a Nth cooling tank of the N cooling tanks, and the battery thermal runaway flue gas is first cooled by the N cooling tanks and then adsorbed by the M adsorption tanks.

3. The battery thermal runaway flue gas treatment device as claimed in claim 2, wherein a flue gas pipe is disposed in each of the N cooling tanks, an inner cavity of the flue gas pipe is the flue gas channel, and an inner cavity of each of the N cooling tanks outside the flue gas pipe is the cooling channel.

4. The battery thermal runaway flue gas treatment device as claimed in claim 3, wherein the flue gas pipe is distributed in a spiral shape inside each of the N cooling tanks, and is configured to increase a length of travel through which the battery thermal runaway flue gas passes; the flue gas inlet of each of the N cooling tanks is disposed on a top end of each of the N cooling tanks, and the flue gas outlet is disposed on a bottom end of each of the N cooling tanks; and the smoke inlet of each of the M adsorption tanks is disposed on a top end of each of the M adsorption tanks, and a smoke outlet is disposed on a bottom end of each of the M adsorption tanks.

5. The battery thermal runaway flue gas treatment device as claimed in any one of claims 2 to 4, wherein a reflux tank is disposed at the flue gas outlet of at least one of the N cooling tanks; a mounting height of the reflux tank is lower than a height of the flue gas outlet of each of the N cooling tanks, so as to collect a liquid medium after condensation of the thermal runaway flue gas; and a gas collection unit is disposed at a smoke outlet of an Mth adsorption tank of the M adsorption tanks, and is configured to collect a treated thermal runaway flue gas.

6. The battery thermal runaway flue gas treatment device as claimed in claim 1, wherein the battery thermal runaway flue gas treatment device comprises a cooling unit and an adsorption unit, which are arranged in sequence, wherein the cooling unit is filled with a cooling material, and configured to reduce a temperature and flow rate of the thermal runaway flue gas; the adsorption unit comprises a first adsorption device, a second adsorption device, and a third adsorption device, which are arranged in sequence; the first adsorption device is filled with an alkaline adsorbing material, and configured to adsorb an acid gas; the second adsorption device is filled with a polar molecule adsorbing material, and configured to adsorb a polar molecule; and the third adsorption device is filled with a non-polar molecule adsorbing material, and configured to adsorb a non-polar molecule.

7. The battery thermal runaway flue gas treatment device as claimed in claim 6, wherein the battery thermal runaway flue gas treatment device comprises a reflux tank, wherein a gas outlet section of the reflux tank communicates with a gas inlet section of the cooling unit; and a mounting height of the reflux tank is lower than a mounting height of the cooling unit, so as to collect electrolyte after condensation.

8. The battery thermal runaway flue gas treatment device as claimed in claim 7, wherein the cooling material is silica, alumina, zirconia, titanium oxide, or honeycomb ceramic; the alkaline adsorbing material is an SDG-I type adsorbent or SDG-II type adsorbent; the polar molecule adsorbing material is zeolite; and the non-polar molecule adsorbing material is activated carbon.

9. The battery thermal runaway flue gas treatment device as claimed in claim 7, wherein the battery thermal runaway flue gas treatment device comprises a gas collection unit, wherein the gas collection unit is connected to a gas outlet section of the third adsorption device.

10. The battery thermal runaway flue gas treatment device as claimed in claim 1, wherein the battery thermal runaway flue gas treatment device comprises a reaction unit and an adsorption unit, which are connected to each other, wherein the reaction unit comprises N reaction devices connected in series; reaction substances are disposed in the N reaction devices; the reaction substances are able to chemically react with a flammable gas and/or an acid gas, to convert the flammable gas into a non-flammable gas, and convert the acid gas into a non-flammable substance or reduce corrosiveness thereof, wherein N is an integer greater than or equal to 1; the adsorption unit comprises M adsorption devices connected in series; and the M adsorption devices are filled with cooling materials and/or adsorbing materials, so as to cool and/or adsorb a reacted thermal runaway flue gas, wherein M is an integer greater than or equal to 1.

11. The battery thermal runaway flue gas treatment device as claimed in claim 10, wherein the reaction substance is a metal oxide and/or an alkaline compound; the metal oxide is configured to undergo a reduction reaction with the flammable gas to convert the flammable gas into the non-flammable gas; and the alkaline compound is configured to undergo a neutralization reaction with the acid gas to convert the acid gas into the non-flammable substance or reduce corrosiveness thereof.

12. The battery thermal runaway flue gas treatment device as claimed in claim 11, wherein the metal oxide is one or more of reduced copper oxide, cuprous oxide, ferric oxide, alumina, cobalt oxide, chromium oxide, and tungsten oxide; the alkaline compound is one or more of strong alkali, a strong alkali weak acid salt, and an alkaline organic compound; the cooling material is a combination of one or more of a ceramic ball, a honeycomb ceramic body, silica, alumina, zirconia, and titanium oxide; and the adsorbing material is a combination of one or more of activated carbon, graphite, alumina, montmorillonite, silicate, phosphate, and porous glass.

13. The battery thermal runaway flue gas treatment device as claimed in claim 10, wherein adjacent reaction devices of the N reaction devices are connected in series through a bent pipe, and/ or adjacent adsorption devices of the M adsorption devices are connected in series through a bent pipe, and/ or adjacent devices of a reaction device of the N reaction devices and an adsorption device of the M adsorption devices are connected in series through a bent pipe
; a buffer reflux cavity for the thermal runaway flue gas to pass through is formed in the bent pipe; and a gas collection bag is also connected to the outlet of a last adsorption device of the M adsorption devices, so as to collect the treated thermal runaway flue gas.

14. The battery thermal runaway flue gas treatment device as claimed in claim 1, wherein the battery thermal runaway flue gas treatment device comprises a cooling unit, a dilution unit, and a mixing device, wherein the cooling unit comprises N cooling devices connected in series; each of the N cooling devices is filled with a first cooling substance to cool the thermal runaway flue gas, wherein N is an integer greater than or equal to 1; and the dilution unit is configured to generate a dilution gas and/or dilution smog, and the dilution gas and/or dilution smog is mixed with a cooled thermal runaway flue gas in the mixing device, so as to reduce a concentration of a flammable gas in the thermal runaway flue gas, causing the flammable gas to be non-flammable.

15. The battery thermal runaway flue gas treatment device as claimed in claim 14, wherein the dilution unit comprises a dilution device and an inductive switch; the dilution device is provided with an aerosol generating agent; the inductive switch starts the dilution device after sensing the thermal runaway flue gas, so as to cause the dilution device to generate aerosol smog; and the aerosol smog is mixed with the cooled thermal runaway flue gas in the mixing device.

16. The battery thermal runaway flue gas treatment device as claimed in claim 15, wherein the dilution device and/or the mixing device is also provided with a second cooling substance, so as to cool the dilution gas, the dilution smog and/or a mixed gas.

17. The battery thermal runaway flue gas treatment device as claimed in claim 16, wherein the first cooling substance is a physical cooling substance; the second cooling substance is a physical cooling substance and/or a chemical cooling substance; the physical cooling substance is at least one of a ceramic ball, a honeycomb ceramic body, silica, alumina, zirconia, or titanium oxide; and the chemical cooling substance is at least one of metal carbonate or basic carbonate.

18. The battery thermal runaway flue gas treatment device as claimed in claim 14 or 15, wherein adjacent cooling devices of the N cooling devices are connected in series through a flexible pipe or bent pipe, and a buffer reflux cavity for the thermal runaway flue gas to pass through is formed in the flexible pipe or bent pipe.

19. The battery thermal runaway flue gas treatment device as claimed in claim 14 or 15, wherein the battery thermal runaway flue gas treatment device comprises an adsorption unit, wherein the adsorption unit comprises at least one adsorption device; the at least one adsorption device is disposed on an outlet end of an Nth cooling device of the N cooling devices, with internally provided with an adsorbent substance, so as to adsorb the cooled thermal runaway flue gas; and an adsorbed thermal runaway flue gas is mixed with the dilution gas and/or the dilution smog in the mixing device.

20. The battery thermal runaway flue gas treatment device as claimed in claim 14 or 15, wherein a gas collection unit is connected to an outlet of the mixing device, and is configured to collect a treated thermal runaway flue gas.

21. The battery thermal runaway flue gas treatment device as claimed in claim 1, wherein the battery thermal runaway flue gas treatment device comprises a cooling housing and a cooling material, wherein a baffle plate is disposed in the cooling housing; the baffle plate divides the cooling housing into a cooling cavity and a reflux cavity; the cooling material is filled in the cooling cavity to cool the thermal runaway flue gas; the baffle plate is provided with a channel; the reflux cavity is located below the cooling cavity, and configured to collect cooled electrolyte; the cooling housing is provided with a gas inlet and a gas outlet; the thermal runaway flue gas enters the cooling housing through the gas inlet, is cooled through the cooling material, and is discharged through the gas outlet; and the cooled electrolyte flows in the reflux cavity.

22. The battery thermal runaway flue gas treatment device as claimed in claim 21, wherein the gas inlet is provided above the baffle plate, and the gas outlet is provided on a top end of the cooling housing; a liquid discharging valve is disposed on the cooling housing, and is configured to discharge the electrolyte in the reflux cavity.

23. The battery thermal runaway flue gas treatment device as claimed in claim 1, wherein the battery thermal runaway flue gas treatment device comprises a cooling housing and a honeycomb ceramic cylinder, wherein the cooling housing at least comprises a first housing and a second housing; the first housing and the second housing are enclosed to form a closed cavity; the honeycomb ceramic cylinder is disposed in the closed cavity; the first housing and/or the second housing is provided with a gas inlet and an exhaust port; and the thermal runaway flue gas enters the cooling housing through the gas inlet, is cooled through the honeycomb ceramic cylinder, and is discharged through the exhaust port.

24. The battery thermal runaway flue gas treatment device as claimed in claim 23, wherein a metal coating is disposed on a porous structure of the honeycomb ceramic cylinder, and is configured to adsorb a flammable gas in the thermal runaway flue gas; and the metal coating is at least one of a rhodium layer, a platinum layer, or a palladium layer.

25. The battery thermal runaway flue gas treatment device as claimed in claim 1, wherein the battery thermal runaway flue gas treatment device comprises a battery thermal runaway flue gas liquid processing agent, wherein the battery thermal runaway flue gas liquid processing agent is mainly composed of one or more of an electrolyte adsorbent, a flammable gas processing agent, and an acid gas processing agent; the electrolyte adsorbent is a liquid that is able to be miscible with electrolyte, and is configured to adsorb the electrolyte in the thermal runaway flue gas; the flammable gas processing agent is a liquid that is able to dilute a flammable gas in the thermal runaway flue gas; and the acid gas processing agent is a liquid that is able to treat an acid gas in the thermal runaway flue gas, so as to cause the acid gas to be non-flammable.

26. The battery thermal runaway flue gas treatment device as claimed in claim 25, wherein the electrolyte adsorbent is an electrolyte activity inhibitor; the flammable gas processing agent is a liquid flame retardant; and the acid gas processing agent is an ionic liquid.

27. **The** battery thermal runaway flue gas treatment device as claimed in claim 26, wherein the electrolyte activity inhibitor comprises one or more of liquid organic ether, ethylene glycol, and 107 silicone rubber; the liquid organic ether comprises one or more of methyl perfluoroisobutyl ether, 1,2-dimethoxyethane, diglyme, dimethoxymethane, methyl nonafluorobutyl ether, tetrahydrofuran, ethyl/methyl tetrahydrofuran, benzenes, and biphenyl; the liquid flame retardant comprises one or more of ethyl benzoate, trimethyl phosphate, tributyl phosphate, tri(fluoroethyl) phosphate, dimethyl phosphate, isopropylphenyl phosphate, cresyl diphenyl phosphate, diphenyl octyl phosphate, alkyl phosphate, hexamethylphosphoramide, tris(2,2,2-trifluoroethyl) phosphite, fluorinated acrylate, dimethyl formate, methyl acetate, methyl propionate, and γ-butyrolactone; and the ionic liquid comprises one or more of imidazoles, quaternary ammonium salts, pyridines, and pyrazoles.

28. **The** battery thermal runaway flue gas treatment device as claimed in claim 26, wherein the battery thermal runaway flue gas liquid processing agent is mainly composed of components with a following volume parts: 20-50 parts of the electrolyte activity inhibitor, 30-60 parts of the liquid flame retardant, and 5-30 parts of the ionic liquid.

29. An application of the battery thermal runaway flue gas liquid processing agent as claimed in any one of claims 25 to 28 in treatment of a battery thermal runaway flue gas.

30. A battery, comprising the battery thermal runaway flue gas treatment device as claimed in any one of claims 1 to 24.
